(19) Europäisches Patentamt / European Patent Office / Office européen des brevets

(11) **EP 3 989 316 A1**

(12) **EUROPEAN PATENT APPLICATION**
published in accordance with Art. 153(4) EPC

(43) Date of publication:
**27.04.2022 Bulletin 2022/17**

(21) Application number: **20836763.1**

(22) Date of filing: **30.06.2020**

(51) International Patent Classification (IPC):
**H01M 4/525** (2010.01)   **H01M 4/36** (2006.01)
**H01M 4/62** (2006.01)   **H01M 10/052** (2010.01)

(52) Cooperative Patent Classification (CPC):
**H01M 4/36; H01M 4/525; H01M 4/62;**
**H01M 10/052; Y02E 60/10**

(86) International application number:
**PCT/KR2020/008500**

(87) International publication number:
**WO 2021/006520 (14.01.2021 Gazette 2021/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.07.2019   KR 20190083105**
**22.01.2020   KR 20200008851**

(71) Applicant: **Battery Solution**
**Seoul 04763 (KR)**

(72) Inventors:
• **SUN, Yang-Kook**
**Seoul 06288 (KR)**
• **RYU, Hoon-Hee**
**Gongju-si, Chungcheongnam-do 32578 (KR)**

(74) Representative: **Prüfer & Partner mbB**
**Patentanwälte · Rechtsanwälte**
**Sohnckestraße 12**
**81479 München (DE)**

(54) **CATHODE ACTIVE MATERIAL FOR LITHIUM SECONDARY BATTERY, METHOD FOR MANUFACTURING SAME, AND LITHIUM SECONDARY BATTERY COMPRISING SAME**

(57)   The present invention relates to a cathode active material comprising a secondary particle consisting of a group of a plurality of primary particles, wherein at least some of the primary particles disposed in the surface of the secondary particle comprise first primary particle in the form of flakes having a pair of first crystal faces facing toward each other, the first crystal faces of the first primary particle are arranged in a radial direction, ends of the pair of first crystal faces are provided with a plurality of crystal faces different from the first crystal faces to connect ends of the pair of first crystal faces, longitudinal cross-sections of the first primary particle comprise a pair of first crystal faces spaced apart from each other and second crystal faces and third crystal faces connecting ends of the pair of first crystal faces, and the second and third crystal faces are disposed in the outermost surface of the secondary particle to be connected to each other at an angle.

【FIG. 1a】

**(Cont. next page)**

【FIG. 1b】

【FIG. 1c】

**Description**

**Field**

The present disclosure relates to a positive-electrode active material, a method for producing the same, and a lithium secondary battery including the same. More specifically, the present disclosure relates to a positive-electrode active material having improved lifespan and exhibiting high capacity at the same time, a method for producing the same, and a lithium secondary battery including the same.

**Description of Related Art**

With development of portable mobile electronic devices such as smart phones, MP3 players, and tablet PCs, the demand for secondary batteries capable of storing electrical energy is increasing explosively. In particular, with the advent of electric vehicles, medium and large sized energy storage systems, and portable devices requiring high energy density, the demand for lithium secondary batteries is increasing.

With the increase in demand for lithium secondary batteries, various research and development are being conducted to improve characteristics of positive-electrode active materials used in lithium secondary batteries. For example, in Korean Patent Application Publication No. 10-2014-0119621 (Application No. 10-2013-0150315), a secondary battery having high voltage capacity and long life characteristics is disclosed in which a precursor for production of a lithium-rich positive-electrode active material is used, and a type and a composition of a metal substituted in the precursor are controlled, a type and an amount of an added metal are controlled.

**DISCLOSURE**

**TECHNICAL PURPOSES**

One technical purpose to be achieved by the present disclosure is to provide a high-capacity positive-electrode active material, a method for producing the same, and a lithium secondary battery including the same.

Another technical purpose that the present disclosure seeks to achieve is to provide a long-life positive-electrode active material, a method for producing the same, and a lithium secondary battery including the same.

Another technical purpose to be achieved by the present disclosure is to provide a high-stability positive-electrode active material, a method for producing the same, and a lithium secondary battery including the same.

Another technical purpose to be achieved by the present disclosure is to provide a positive-electrode active material that has a high discharge capacity and at the same time has minimized lifespan deterioration depending on the number of charge/discharge, a method for producing the same, and a lithium secondary battery including the same.

The technical purpose to be achieved by the present disclosure is not limited to the above purposes.

**TECHNICAL SOLUTIONS**

One aspect of the present disclosure provides a positive-electrode active material including secondary particles, wherein each of the secondary particles is composed of an aggregate of a plurality of primary particles, wherein at least some of the primary particles disposed in a surface of the secondary particle are defined as first primary particles, wherein each of the first primary particles has a flake shape having a pair of first crystal planes facing toward each other, wherein each of the first crystal planes of the first primary particle is oriented in a radial direction of the secondary particle, wherein outer ends of the pair of the first crystal planes are connected to a plurality of crystal planes different from the first crystal planes such that the plurality of crystal planes connect the outer ends of the pair of the first crystal planes to each other, wherein the plurality of crystal planes include a second crystal plane and a third crystal plane, wherein a longitudinal cross-section of the first primary particle is defined by the pair of first crystal planes spaced apart from each other, and the second crystal plane and the third crystal plane connecting the outer ends of the pair of first crystal planes to each other, wherein the second and third crystal planes are disposed in an outermost face of the secondary particle and are connected to and meet each other at a predefined angle.

In one implementation of the positive-electrode active material, the first primary particle has a first length as a major axis of the first crystal plane, a second length as a minor axis of the first crystal plane perpendicular to the first length, and a third length as an spacing between the pair of first crystal planes spaced from each other, wherein the third length is in a range of 10nm to 400nm.

In one implementation of the positive-electrode active material, a ratio of the first length to the third length is in a range of 2 to 100, and a ratio of the second length to the third length is in a range of 1.5 to 80

In one implementation of the positive-electrode active material, the positive-electrode active material includes a layered rhombohedral system compound, wherein the first crystal plane has a Miller index (hk$\ell$) where h=0, k=0, $\ell$=3n, and n is an integer, wherein the first crystal plane, the second crystal plane, and the third crystal plane are different from each other.

In one implementation of the positive-electrode active material, the predefined angle between the second crystal plane and the third crystal plane is in a range of 30° to 170°.

In one implementation of the positive-electrode active material, when a 2032 coin-type half-cell prepared using the positive-electrode active material as a positive-electrode, and using lithium metal as a negative-electrode is subjected to 100 cycles of charging to 4.3 V at 0.5 C constant current and discharging to 2.7 V at 0.5 C constant current to obtain a dQ/dV curve, an intensity of a peak corresponding to a phase transition of H2 to H3 in the dQ/dV curve is equal to or greater than 40% of an intensity of a peak corresponding to a phase transition of H2 to H3 when the 2032 coin-type half-cell is subjected to 1 cycle.

In one implementation of the positive-electrode active material, the primary particle includes nickel (Ni), M1 and M2, wherein M1 is made of at least one of manganese (Mn), cobalt (Co) and aluminum (Al), wherein a content of the nickel (Ni) is 65 mol% or greater, wherein M2 is a doping element, and has a content in a range of 0.05 mol% to 5 mol%.

In one implementation of the positive-electrode active material, M2 includes: boron (B); or boron (B) and at least one selected from a group consisting of tungsten (W), molybdenum (Mo), tantalum (Ta), niobium (Nb), hafnium (Hf), silicon (Si), tin (Sn), zirconium (Zr), calcium (Ca), Germanium (Ge), gallium (Ga), indium (In), ruthenium (Ru), tellurium (Te), antimony (Sb), iron (Fe), chromium (Cr), vanadium (V) and titanium (Ti).

In one implementation of the positive-electrode active material, a coating layer including boron (B) covers at least a portion of the second and third crystal planes.

In one implementation of the positive-electrode active material, a concentration of boron (B) is uniform in the secondary particle, and a concentration of boron (B) has a concentration-gradient in the coating layer, wherein an average concentration of boron (B) in the coating layer is higher than an average concentration of boron (B) in the secondary particle.

In one implementation of the positive-electrode active material, the coating layer includes lithium borate selected from a group consisting of $LiBO_2$, $LiB_3O_5$, $LiB_5O_8$, $\alpha$-$LiBO_2$, $Li_2B_2O_4$, $Li_2B_2O_7$, $Li_2B_4O_7$, $Li_2B_6O_7$, $Li_2B_6O_{10}$, $Li_2B_8O_{13}$, $Li_3BO_3$, $Li_3B_7O_{12}$, $Li_4B_2O_5$, $\alpha$-$Li_4B_2O_5$, $\beta$-$Li_4B_2O_5$, $Li_4B_{10}O_{17}$ and $Li_6B_4O_9$.

In one implementation of the positive-electrode active material, when a half-cell prepared using the positive-electrode active material as a positive-electrode, and using lithium metal as a negative-electrode is charged up to 4.3 V at 0.5 C constant current, a total area of microcracks as spaces defined between boundaries of neighboring primary particles in the secondary particle is smaller than 15% of a cross-sectional area of the secondary particle.

In one implementation of the positive-electrode active material, 7, wherein when the secondary particle is subj ected to X-ray diffraction analysis based on a measuring result thereof using a device with 45 kV and 40 mA output, and using a Cu Ka beam source, and at a scan rate of 1 degree per minute at 0.0131 step size spacing, a ratio between an intensity of a 003 peak and an intensity of a 104 peak is in a range of 1.6 to 2.3

In one implementation of the positive-electrode active material, as a content of the doping element increases, the ratio between the intensity of the 003 peak and the intensity of the 104 peak decreases.

In one implementation of the positive-electrode active material, the secondary particle has a sphere shape having a center and a surface, wherein the first crystal plane of the first primary particle extends from the center to the surface thereof, wherein the second and third crystal planes of the first primary particle are disposed in the surface of the secondary particle, so that an outermost portion of the surface of the secondary particle has a concave-convex structure defined by the second and third crystal planes.

In one implementation of the positive-electrode active material, wherein the secondary particle is represented by a following <Chemical Formula 1>:

$$\text{<Chemical Formula 1>} \qquad Li_aM_xD_yO_2,$$

where in the <Chemical Formula 1>, M denotes at least one of Ni, Co, Mn, or Al; D denotes a doping element composed only of B or a co-doping element composed of a combination of B and one of W, Mo, Nb, Ta, and Sb, wherein 0.9<a<1.1, and x+y = 1, and 0.95<x<1, 0<y<0.05, wherein a coating layer covering at least a portion of the second and third crystal planes is disposed on the surface of the secondary particle.

In one implementation of the positive-electrode active material, the first primary particle has a flake shape having a first length as major axis of the first crystal plane, a second length as a minor axis of the first crystal plane perpendicular to the first length, and a third length as a spacing between the pair of first crystal planes, wherein a content of the doping element is in a range of 0.05 mol% to 5 mol%, wherein as a concentration of the doping element increases, the first length of the first primary particle increases, while the third length thereof decreases.

Another aspect of the present disclosure provides a positive-electrode for a secondary battery including the positive-electrode active material as described above.

Another aspect of the present disclosure provides a lithium secondary battery including the positive-electrode as described above.

Another aspect of the present disclosure provides a battery module including the lithium secondary battery as described above as a unit cell.

Still another aspect of the present disclosure provides a battery pack including the battery module, wherein the battery pack is used as a power source for a medium and large sized apparatus, wherein the medium and large sized apparatus is selected from a group consisting of an electric vehicle, a hybrid electric vehicle, a plug-in hybrid electric vehicle, and a power storage system.

## TECHNICAL EFFECTS

According to the present disclosure as described above, the positive-electrode active material according to the present disclosure may include the secondary particle as aggregation of the plurality of primary particles, wherein the secondary particle may include nickel at a high content and may contain the doping element.

The doping element may control the flake form of the first primary particle, thereby providing the positive-electrode active material that may be used stably for a long time and have a high discharge capacity.

## BRIEF DESCRIPTION OF THE DRAWINGS

FIG. 1a is an SEM picture of a secondary particle according to an embodiment of the present disclosure.

FIG. 1b is a diagram to show a radial shape of the secondary particle of FIG. 1b.

FIG. 1c is a schematic diagram of a cross-section of a secondary particle according to an embodiment of the present disclosure.

FIG. 2 is a flowchart showing a method for producing a positive-electrode active material according to another embodiment of the present disclosure.

FIG. 3 is an SEM image of metal composite hydroxide according to each of Present Example 1 and Present Example 2.

FIG. 4 is an SEM image of the positive-electrode active material according to each of Present Example 1 and Present Example 2.

FIG. 5 is an SEM image of metal composite hydroxide according to each of Present Example 4 to Present Example 7.

FIG. 6 is an SEM image of the positive-electrode active material according to each of Present Example 4 and Present Example 7.

FIG. 7 is an SEM image of metal composite hydroxide according to each of Present Example 9 to Present Example 12.

FIG. 8 is an SEM image of the positive-electrode active material according to each of Present Example 9 and Present Example 12.

FIG. 9 is an SEM image of measuring a thickness of a primary particle disposed in a surface of a secondary particle according to a boron (B) doping amount in an NCO-based positive-electrode active material using metal composite hydroxide containing Ni at 90 mol%.

FIG. 10 is an SEM image of the positive-electrode active material that is not doped with boron (B) in FIG. 9.

FIG. 11 is an SEM image of the positive-electrode active material doped with boron (B) at 0.5 mol% in FIG. 9.

FIG. 12 is a SEM image of the positive-electrode active material doped with boron (B) at 1 mol% in FIG. 9.

FIG. 13 is an SEM image of the positive-electrode active material doped with 1.5 mol% boron (B) in FIG. 9.

FIG. 14 is an SEM image of the positive-electrode active material doped with 2 mol% boron (B) in FIG. 9.

FIG. 15a is a graph showing a result of measuring a spacing between a pair of (003) planes as a third length of a primary particle disposed in a surface of a secondary particle among primary particles using a SEM image, in an NCO-based positive-electrode active material using metal composite hydroxide containing 90 mol% Ni.

FIG. 15b is a graph of a length of the (003) plane based on a boron (B) doping amount.

FIG. 16a is a graph showing a first length, a second length, and a third length based on a boron (B) doping amount.

FIG. 16b is a graph showing a ratio of each of the first length and the second length to the third length based on a boron (B) doping amount.

FIG. 17 is an SEM image of the positive-electrode active material according to each of Present Example 24 and Comparative Example 7.

FIG. 18 is a FIB TEM image of the positive-electrode active material according to each of Present Example 24 and Comparative Example 7.

FIG. 19 is a FIB TEM image of the positive-electrode active material according to each of Present Example 24 and Comparative Example 7 before an initial cycle.

FIG. 20 is a FIB TEM image of Present Example 24 in FIG. 19 before an initial cycle.

FIG. 21 is a FIB TEM image after 100 cycles of Present Example 24.

FIG. 22 to FIG. 24 are the results of analyzing a coating layer of a primary particle disposed in a surface of the secondary particle in Present Example 24.

FIG. 25 is a TEM image of a primary particle of Present Example 24.

FIG. 26 to FIG. 28 are XRD analysis results before and after heat-treatment of borate and lithium hydroxide.

FIG. 29 is a cycle graph of a full-cell using the positive-electrode active material according to each of Present Example 24 and Comparative Example 7.

FIG. 30 is an SEM image showing a cross-section of a secondary particle when charging the positive-electrode active material according to each of Present Example 24 and Comparative Example 7 at varying charging voltages.

FIG. 31 shows a SEM image after a cycle of each of a half-cell and a full-cell using the positive-electrode active material according to each of Present Example 24 and Comparative Example 7.

FIG. 32 and FIG. 33 are in-situ XRD data of each of Present Example 24 and Comparative Example 7.

## DETAILED DESCRIPTIONS

The specific details of other embodiments are contained in the detailed description and drawings.

Advantages and features of the present disclosure, and a method to achieve the same will become apparent with reference to the embodiments described below in detail in conjunction with the accompanying drawings. However, the present disclosure is not limited to the embodiments disclosed below and may be implemented in a variety of different forms. Unless otherwise specified in following descriptions, all of numbers, values, and/or expressions indicating ingredients, reaction conditions, and contents of ingredients in the present disclosure are, in essence, approximations thereof based on various uncertainties in measurements which occur in obtaining the numbers, values, and/or expressions. Thus, the numbers, values and/or expressions should be understood as being modified by a term "about" in all instances. Further, where a numerical range is disclosed in the present description, the range is continuous and includes a minimum value and a maximum value of the range, unless otherwise indicated. Further, where the number or the value refers to an integer, the range includes all of integers contained between the minimum and the maximum of the range, unless otherwise indicated.

Further, in the present disclosure, when a variable is contained in a range, the variable will be understood to include all values within a stated range including stated endpoints of the range. For example, a range of "5 to 10" includes values of 5, 6, 7, 8, 9, and 10, as well as any subranges such as 6 to 10, 7 to 10, 6 to 9, 7 to 9, etc. It will be understood that the variable includes any value between valid integers in a stated range such as 5.5, 6.5, 7.5, 5.5 to 8.5, and 6.5 to 9, etc. For example, a range "10% to 30%" includes all of integer values such as 10%, 11%, 12%, 13%, 30%, etc. as well as any subranges such as 10% to 15%, 12% to 18%, or 20% to 30%, etc. It will be understood that the range includes any value between valid integers within the stated range such as 10.5%, 15.5%, 25.5%, etc.

In one embodiment, a size and a particle diameter of each of various particles such as a primary particle, a secondary particle, etc. may be represented as an average value of measurements from a measurement method thereof. However, the present disclosure may be limited thereto. Conventionally, a mode diameter expressing the maximum value of the distribution, a median diameter corresponding to a median value of the integral distribution curve, and various average diameters (number average, length average, area average, mass average, volume average, etc.) may be employed. In the present disclosure, unless otherwise specified, the average size and the average particle diameter may refer to a number average size and diameter, and D50 (a particle diameter at a point where the distribution percentage is 50%) may be measured.

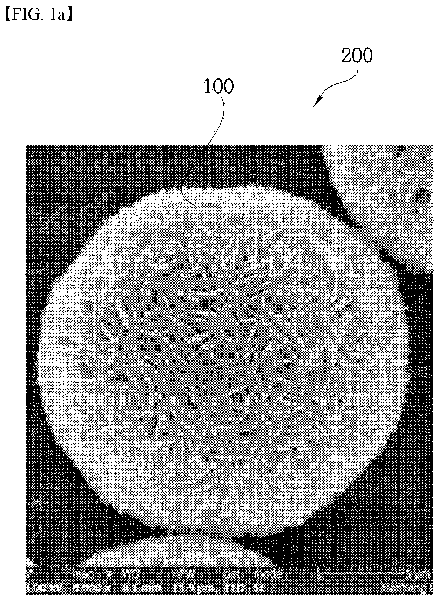

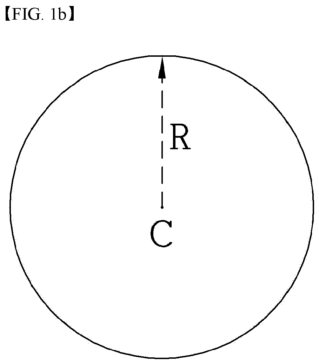

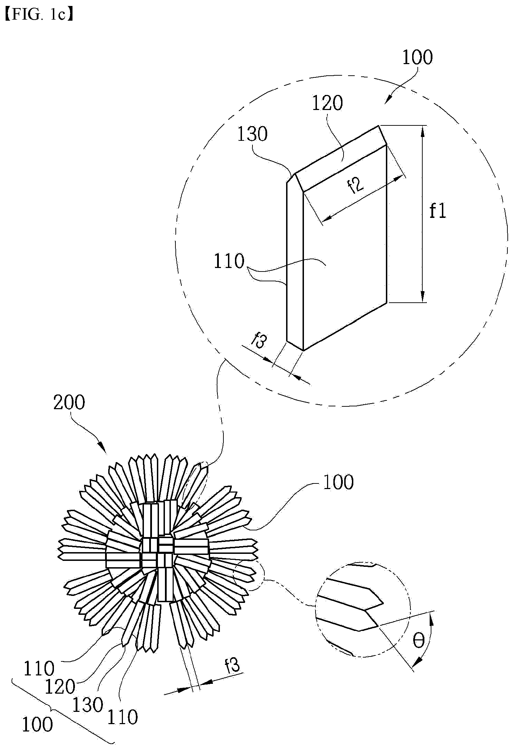

FIG. 1a is an SEM picture of a secondary particle according to an embodiment of the present disclosure. FIG. 1b is a diagram for showing a radial shape of a secondary particle of FIG. 1b. FIG. 1c is a schematic diagram of a cross-section of a secondary particle according to an embodiment of the present disclosure.

Referring to FIG. 1a to FIG. 1c, a positive-electrode active material according to this embodiment may be composed of secondary particles 200, each including a plurality of primary particles. The positive-electrode active material may be used as a positive-electrode active material for lithium secondary batteries.

Each of at least some of the primary particles disposed in a surface of the secondary particle 200 may include a first primary particle 100 in a form of a flake having a pair of first crystal planes 110 facing toward each other.

The secondary particle 200 may be composed of an aggregation of a plurality of primary particles. Among the primary particles, the first primary particle 100 having the pair of first crystal planes 110 may have the first crystal plane 110 oriented in a radial direction from a center c of the secondary particle 200 to a surface thereof. For example, outer ends of the pair of first crystal planes 110 disposed in an outermost face of the secondary particle 200 may be connected to each other by a plurality of crystal planes. More specifically, the pair of first crystal planes 110 may be spaced apart from each other, and extend in parallel to each other. The outer ends of the pair of first crystal planes 110 may be connected to each other via a plurality of crystal planes different from the first crystal planes 110.

The first primary particle 100 having a flake shape is oriented toward the center of the secondary particle 200. A longitudinal cross-section perpendicular to a direction of each of the pair of crystal planes 110 is defined by the pair of first crystal planes 110 parallel to each other and a second crystal plane 120 and a third crystal plane 130 connecting the outer ends of the pair of first crystal planes 110 to each other. Further, the second and third crystal planes 120 and 130 may disposed at the outermost face of the secondary particle 200 and meet each other at an angle θ.

The radial direction means that the first primary particle 100 is oriented in a direction R from the center c of the secondary particle 200 to the surface of the secondary particle 200 as shown in FIG. 1b.

In the positive-electrode active material according to the present embodiment, the first primary particle 100 having the pair of first crystal planes 110 may be radially oriented and may be disposed in the surface of the secondary particle 200. The first primary particle 100 may be having a flake shape extending from one end to the other end thereof. The outer end of the first primary particle 100 may face toward an outer surface of the secondary particle 200, while an inner end of the first primary particle 100 may face toward the center c of the secondary particle 200.

For example, in the first primary particle 100, the direction of the first crystal plane 110 is oriented to be parallel to the radial direction. Thus, diffusion of lithium ions from the surface of the secondary particle 200 to the center thereof may be promoted. Further, the first primary particle 100 may extend in the movement direction of lithium ions. The spacing between the pair of first crystal planes 110 may be controlled. Therefore, this may reduce the volume change even during expansion and contraction caused by repeated reversible charging and discharging. Thus, cracks that may occur between the primary particles, for example, the separation spacing between the primary particles due to the shape change of the primary particles due to the volume change accompanying the electrochemical reaction may be reduced, so that the lifespan characteristics of the secondary battery may be improved.

As shown in FIG. 1c, the flake shape of the first primary particle 100 means that a pair of first crystal planes 110 is disposed at the outermost face of the secondary particle, and a spacing between the pair of first crystal planes 110 defines a thickness of the flake. Further, the longitudinal cross-section of the first primary particle 100 may be defined by the pair of first crystal planes 110 and the second and third crystal planes 120 and 130 connecting the outer ends of the pair of first crystal planes 110 to each other.

The first primary particle 100 may have a first length f1 that is a major axis of the first crystal plane 110, a second length f2 as a minor axis of the first crystal plane 110 perpendicular to the first length f1, and a third length f3 as a spacing between the pair of first crystal planes 110.

The first length f1 may be the longest length in a radial direction in the first crystal plane 110, and the second length f2 may be a length of each of the outer ends of the pair of first crystal planes 110, that is, the shortest length of a portion of the first crystal plane 110 facing toward the surface of the secondary particle 200, and thus may be a length of the minor axis thereof. The third length f3 may be a thickness of the flake as a spacing between the pair of first crystal planes 110. The first length f1 may be larger than each of the second and third lengths f2 and f3, and the second length f2 may be larger than the third length f3.

The third length f3 may be on a range of 10 nm to 400 nm. When the third length f3 is smaller than 10 nm, a surface area of the secondary particle 200 may be increased to increase a contact area thereof with the electrolyte, such that the electrolyte may invade into the secondary particle in the process of performing the cycle of the secondary battery, and thus the lifespan thereof may be rapidly lowered. Further, when the third length f3 is greater than 400 nm, cracks may be produced due to volume change due to repeated contraction and expansion of the primary particles in the charging/discharging process of the secondary battery, thereby reducing the lifespan thereof. Preferably, an average value of the third length f3 may be in a range of 30 nm to 300 nm, and more preferably 50 nm to 150 nm.

A ratio of the first length f1 to the third length f3 may be in a range of 2 to 100, and a ratio of the second length f2 to the third length f3 may be in a range of 1.5 to 80.

In the first primary particle 100, the first length f1, the second length f2, and the third length f3 may affect each other. The first length f1, the second length f2 and the third length f3 may be in the above-described ranges. Thus, the secondary particle including the first primary particles 100 may stably maintain a high discharge capacity due to high content nickel (Ni), and may be maintained to be structurally constant during a number of cycles, thereby improving lifespan characteristics of the battery.

The positive-electrode active material may be a layered rhombohedral system compound, and the first crystal plane 110, the second crystal plane 120 and the third crystal plane 130 may be expressed by a Miller index $(hk\ell)$. The first crystal plane 110, the second crystal plane 120, and the third crystal plane 130 may be different crystal planes. For example, when the first crystal plane has $(hk\ell)$ where h=0, k=0, $\ell$=3n (n may be an integer), the second and third crystal planes may be different crystal planes from the first crystal plane.

The first crystal plane 110, the second crystal plane 120, and the third crystal plane 130 may act as crystal planes of a layered rhombohedral system compound. For example, the first crystal plane 110 may have $(hk\ell)$ as at least one of (003), (006), (009), (0012), and (0015), while each of the second crystal plane 120 and the third crystal plane 130 may be the remaining (hkl) except for the (hkl) of the first crystal plane 110 in the layered rhombohedral system. The second and third crystal planes 120 and 130 may connect the outer ends of the pair of first crystal planes 110 spaced apart from each other to each other.

The first primary particle 100 according to the present embodiment may have a flake shape including at least four crystal planes. The crystal plane may constitute an outer shape of a crystal and mean a plane parallel to a lattice plane.

The pair of the first crystal planes 110 constituting the first primary particle 100 may face toward each other and may have a lager area in the flake shape. The second and third crystal planes 120 and 130 may respectively contact one and the other of the pair of first crystal planes 110. An outer end of the flake shape may have a triangular cross section defined by the second and third crystal planes 120 and 130 meeting each other at the angle θ.

In the first primary particle 100, the first crystal plane 110 may be a (003) plane. The outer ends of the pair of first crystal planes 110 in the first primary particle 100, that is, both opposing ends of a portion of the first primary particle 100 disposed in the outer surface of the secondary particle 200 may be connected to each other via the second crystal plane 120 and the third crystal plane 130 connected to each other and meeting each other at an angle.

For example, the second crystal plane 120 may be connected to the outer end of one of the pair of first crystal planes 110 and may meet therewith at an angle of 90° or greater. The third crystal plane 130 may be connected to the outer end of the other of the pair of first crystal plane 110 and may meet therewith at an angle of 90° or greater. The second crystal plane 120 and the third crystal plane 130 connecting the outer ends of the pair of first crystal planes 110 to each other may be connected to and meet each other at a predetermined angle. Thus, the outer surface of the secondary particle 200 may have a sharp concave-convex pattern defined by the outer end of the first primary particle 100. Further, in a cross section extending in a direction from the surface of the secondary particle 200 toward the center c thereof and perpendicular to the pair of first crystal planes 110, the angle θ at which the second crystal plane and the third crystal plane meet each other may be in a range of 30° to 170°. When the angle θ between the second crystal plane and the third crystal plane is smaller than 30°, the surface area of the secondary particle increases to increase the contact area thereof with the electrolyte. Accordingly, in the charging/discharging process, the electrolyte may flow into the center of the secondary particle 200 to cause microcrack in the secondary particle. When the angle θ between the second crystal plane and the third crystal plane exceeds 170°, the efficiency of lithium ions moving into the secondary particle 200 may be reduced. Specifically, the angle θ between the second crystal plane and the third crystal plane may be in a range of 90° to 170°, more specifically, 110° to 170°, and even more specifically, 120° to 160°.

A 2032 coin-type half-cell using the positive-electrode active material as a positive-electrode, and using lithium metal as a negative-electrode is tested. After 100 cycles of 2.7V discharge at 0.5C constant current and 4.3V charge at 0.5C constant current, a charge/discharge curve is obtained which is differentiated at a first-order to obtain a graph as a dQ/dV curve. An intensity of a peak corresponding to a phase transition of H2 to H3 in the dQ/dV curve may be 40% or greater, preferably 60% to 98%, and more preferably, 70% to 90%, compared to that after one cycle.

The primary particle may include Ni and M1 and M2, wherein the M1 may be made of at least one of Mn, Co, and Al, a content of Ni may be 65 mol% or greater, and M2 may act as a doping element having a content of 0.05 mol% to 5 mol%.

The primary particle according to this embodiment may include nickel (Ni) at a high content of 65 mol% or greater, and may further include a doping element. The doping element may be made of a material other than lithium (Li), nickel (Ni), manganese (Mn), cobalt (Co) and aluminum (Al). The doping element may be contained in a content of 0.05 mol% to 5 mol%.

The doping element may control the shape of the first primary particle 100 among the primary particles, and control the shape of contraction and expansion occurring in the lithium ion insertion or desorption process, thereby improving the lifespan characteristics of a secondary battery. When the content of the doping element is smaller than 0.05 mol%, it is difficult for the first primary particle to be radially oriented, such that the lithium ion movement efficiency is reduced. When the content exceeds 5 mol%, a spacing between the pair of first crystal planes 110 in the first primary particle 100 is too small, and thus cracks may occur in the cycle process.

Preferably, the doping element M2 may include boron (B).

In the present disclosure, a coating layer including boron (B) covering at least a portion of the second and third crystal planes 120 and 130) may be disposed on the second and third crystal planes 120 and 130 of the first primary particle 100 disposed in the outer surface of the secondary particle 200. The boron (B) may be present in a doped manner into the secondary particle 200. The boron (B) may constitute the coating layer covering at least a portion of the outer surface of the secondary particle while controlling the shape of the first primary particle.

The first primary particle 100 according to this embodiment include boron (B). The coating layer including boron (B) may be disposed on the outer surface of the secondary particle 200. A concentration of boron (B) may be uniform in the secondary particle 200, while the concentration of boron (B) may have a concentration-gradient in the coating layer. Preferably, an average concentration of boron (B) in the coating layer may be higher than the average concentration of boron (B) in the secondary particle 200.

The coating layer may include lithium borate selected from a group consisting of $LiBO_2$, $LiB_3O_5$, $LiB_5O_8$, α-

$LiBO_2$, $Li_2B_2O_4$, $Li_2B_2O_7$, $Li_2B_4O_7$, $Li_2B_6O_7$, $Li_2B_6O_{10}$, $Li_2B_8O_{13}$, $Li_3BO_3$, $Li_3B_7O_{12}$, $Li_4B_2O_5$, $\alpha$-$Li_4B_2O_5$, $\beta$-$Li_4B_2O_5$, $Li_4B_{10}O_{17}$ and $Li_6B_4O_9$.

The coating layer may be produced by reacting lithium compound with borate, for example, according to a following reaction formula.

$$Li_2CO_3 + B_2O_3 \rightarrow Li_2B_2O_4 + CO_2$$

$$LiOH + B_2O_3 \rightarrow Li_2B_2O_4 + H_2O$$

$$Li_2CO_3 + 2B_2O_3 \rightarrow Li_2B_4O_7 + CO_2$$

$$2LiOH + B_2O_3 \rightarrow Li_2B_4O_7 + H_2O$$

For example, the secondary particle as a collection of primary particles may be produced in which each primary particle may be produced using a metal compound of at least one of manganese (Mn), cobalt (Co) and aluminum (Al), and the boron (B) as a doping element together with nickel (Ni). Then, the secondary particles may be mixed with a lithium compound and the mixture may be sintered to produce a positive-electrode active material. The secondary particle may include the borate in a concentration-controlled manner. The borate may react with the lithium compound as shown in the above reaction formula to form the coating layer on the outer surface of the secondary particle. The above-described reaction formula for producing the coating layer is an example. The lithium borate constituting the coating layer may be produced in various reaction formulas.

In the secondary particle 200 according to this embodiment, the secondary particle 200 may be composed of aggregation of a plurality of primary particles including the first primary particles 100. The first primary particles 100 may be disposed in the outer surface of the secondary particle 200 so that the first crystal plane 110 of the first primary particle 100 is radially oriented in the secondary particle 200. Further, the first primary particle 100 may be constructed such that the second and third crystal planes 120 and 130 of the first primary particle 100 are positioned in the outer surface of the secondary particle 200. The doping element may include boron (B), and the boron (B) may have a uniform concentration inside the first primary particle 100 to control the shape and position of the first primary particle 100. The boron may constitute the coating layer covering at least a portion of the second and third crystal planes 120 and 130 of the first primary particle 100 and may control growth having the directionality of the first crystal plane 110 of the first primary particle 100.

Further, in another embodiment of the present disclosure, the doping element, M2 may include the boron (B); and at least one of tungsten (W), molybdenum (Mo), tantalum (Ta), niobium (Nb), hafnium (Hf), silicon (Si), tin (Sn), zirconium (Zr), calcium (Ca), germanium (Ge), gallium (Ga), indium (In), ruthenium (Ru), tellurium (Te), antimony (Sb), iron (Fe), chromium (Cr), vanadium (V) and titanium (Ti). More preferably, the doping element M2 may be present in a co-doped state of two doping elements, for example, boron (B) and tungsten (W), boron (B) and molybdenum (Mo), boron (B) and niobium (Nb), boron (B) and tantalum (Ta), and boron (B) and antimony (Sb).

In an embodiment of the present disclosure, a half-cell may be prepared using the positive-electrode active material as the positive-electrode and the lithium metal as the negative-electrode and then may be charged to 4.3V at 0.5C constant current. In this connection, in a cross-section of the secondary particle 200, an area of a microcrack as a space between boundaries of neighboring primary particles may be smaller than 15% of the area of the cross-section of the secondary particle.

The microcrack may be formed in a form of a space between the adjacent primary particles in a cross-section view of a spherical secondary particle. The microcrack may extend approximately from the center of the secondary particle toward the surface of the secondary particle. The microcrack may start at the center of the secondary particle. In the charging and discharging process, the microcrack may be formed by sharp change in volume, and may extend from the center to the surface in the process of charging and discharging cycles. The microcrack extending to the surface may act as an inflow path of the electrolyte. Thus, the electrolyte may be introduced through the microcrack, and thus a passivation layer may be formed inside the secondary particle, which may act as a resistance to reduce electrical efficiency. In severe cases, the passivation layer may increase the area of the microcrack in the secondary particle, such that the secondary particle may be almost destroyed.

On the contrary, in the secondary particle according to the present embodiment, the microcrack is hardly formed while a plurality of cycles proceeds. For example, a 2032 coin-type half-cell may be prepared using the positive-electrode active material as the positive-electrode and the lithium metal as the negative-electrode and then may be charged to 4.3V at 0.5C constant current. In this connection, in a cross-section of the secondary particle 200, the area of the microcrack as a space between boundaries of neighboring primary particles may be smaller than 15% of the area of the cross section of the secondary particle. Preferably, the area of the microcrack may be smaller than 10%, more preferably smaller than 7% thereof.

The secondary particle 200 is subjected to an X-ray diffraction analysis based on a measuring result of the secondary particle 200 using a device (Empyrean, Panalytical) having an output of 45 kV and 40 mA and using a Cu Ka beam source and at a scan rate of 1 degree per minute at 0.0131 step size spacing. In this connection, a ratio of the intensity of a 003 peak to the intensity of a 104 peak excluding the background may be in a range of 1.6 to 2.15. Further, as the content of the doping element increases, the ratio of the intensity of the 003 peak to the intensity of the 104 peak may decrease.

According to another aspect of the present disclosure, the secondary particle 200 may have a sphere shape having a center c and a surface, wherein the first primary particle 100 may have the first crystal plane 110 oriented from the center c to the surface of the secondary particle. In the first primary particle 100, the second and third crystal planes 120 and 130 may be disposed in the surface of the secondary particle 200, so that the outermost portion of the surface of the secondary particle 200 may have a concave-convex structure defined by the second and third crystal planes 120 and 130.

The secondary particle 200 may be represented by a following <Chemical Formula 1> and may further include the coating layer disposed in the surface of the secondary particle 200, wherein the coating layer covers at least a portion of the second and third crystal planes 120 and 130.

$$\text{<Chemical Formula 1>} \qquad Li_aM_xD_yO_2$$

where in the <Chemical Formula 1>, M denotes at least one of Ni, Co, Mn, or Al; D denotes a doping element composed only of B or a co-doping element composed of a combination of B and one of W, Mo, Nb, Ta, and Sb, wherein $0.9 < a < 1.1$, and $x+y = 1$, and $0.95 < x < 1$, $0 < y < 0.05$.

The first primary particle 100 may have a flake shape having the first length f1 that is a major axis of the first crystal plane 110, the second length f2 as a minor axis of the first crystal plane 110 perpendicular to the first length f1, and the third length f3 which is a spacing between the pair of first crystal planes 110. The first primary particle 100 having the flake shape may be oriented such that the major axis extends from the center c of the secondary particle 200 to the surface thereof.

The doping element may be contained in 0.05 mol% to 5 mol%. As the concentration of the doping element increases, the first length f1 of the first primary particle 100 may increase and the third length f3 may be reduced. Preferably, the content of the doping element may be in a range of 0.05 mol% to 2 mol%, and more preferably, the content of the doping element may be in a range of 0.5 mol% to 2 mol%.

According to another aspect of the present disclosure, the present disclosure may provide the positive-electrode active material including the spherical secondary particle made of a layered rhombohedral system compound including metal, lithium, the doping element, and oxygen; the coating layer disposed on the surface of the secondary particle, wherein the coating layer is made of a compound including lithium, the doping element, and oxygen and has a crystal structure different from that of the secondary particle, wherein the metal may include nickel (Ni); and at least one of cobalt (Co), manganese (Mn), and aluminum (Al).

The average concentration of the doping element in the coating layer may be higher than the average concentration of the doping element in the secondary particle. The coating layers may include lithium borate selected from a group consisting of $LiBO_2$, $LiB_3O_5$, $LiB_5O_8$, $\alpha\text{-}LiBO_2$, $Li_2B_2O_4$, $Li_2B_2O_7$, $Li_2B_4O_7$, $Li_2B_6O_7$, $Li_2B_6O_{10}$, $Li_2B_8O_{13}$, $Li_3BO_3$, $Li_3B_7O_{12}$, $Li_4B_2O_5$, $\alpha\text{-}Li_4B_2O_5$, $\beta\text{-}Li_4B_2O_5$, $Li_4B_{10}O_{17}$ and $Li_6B_4O_9$.

A thickness of the coating layer may be in a range of 1 nm to 10 nm. When the thickness of the coating layer is smaller than 1 nm, it is difficult to effectively protect the surface of the secondary particle, resulting in deterioration of the lifespan characteristics of the secondary battery. When the thickness of the coating layer is greater than 10 nm, the movement of the lithium ions may be restricted, thereby to lower the capacity of the battery.

The first primary particle may have a crystal structure, wherein an $\alpha$-axis of the crystal structure may be oriented in parallel to a direction from the center of the secondary particle toward the surface thereof. Thus, a movement path of lithium ions and electrolyte may be formed between the first primary particles having the flake shape, and thus the charging and discharging efficiency of the secondary battery including the positive-electrode active material may be improved.

According to one embodiment, the metal may be present to have a concentration-gradient in the secondary particle. For example, at least one of nickel, cobalt, manganese, and aluminum may have a continuous or discontinuous concentration-gradient within at least one region of the secondary battery.

According to an embodiment of the present disclosure, the positive-electrode active material may be produced by mixing a lithium compound with a positive-electrode active material precursor produced using a metal and a doping element and sintering the mixture.

Alternatively, according to another embodiment, the producing method of the positive-electrode active material may include supplying the transition metal aqueous solution, the chelating agent, and the doping source into a reactor to produce the positive-electrode active material precursor doped with the doping element, and mixing and sintering the positive-electrode active material precursor and lithium salt with each other.

According to another aspect of the present disclosure, an embodiment of the present disclosure includes a positive-electrode for a secondary battery including the positive-electrode active material as described above.

Further, according to another aspect of the present disclosure, an embodiment of the present disclosure may include a lithium secondary battery including the positive-electrode.

Further, another aspect of the present disclosure may include a battery module including the lithium secondary battery as a unit cell.

Further, still another aspect of the present disclosure provides a battery pack including the battery module, wherein the battery pack is used as a power source for a medium and large sized apparatus, wherein the medium and large sized apparatus is selected from a group consisting of an electric vehicle, a hybrid electric vehicle, a plug-in hybrid electric vehicle, and a power storage system.

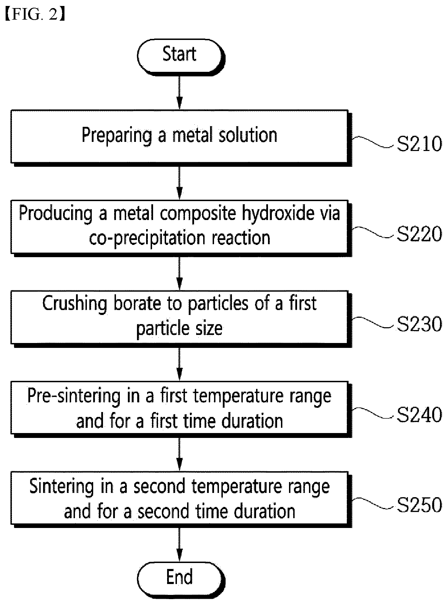

FIG. 2 is a flowchart showing a method for producing a positive-electrode active material according to another embodiment of the present disclosure.

Referring to FIG. 2, the method for producing a positive-electrode active material according to this embodiment includes preparing a metal solution in S210; producing a metal composite hydroxide via co-precipitation reaction of the metal solution with ammonia solution and sodium hydroxide solution in S220; crushing borate to particles of a first particle size in S230; mixing the metal composite hydroxide, lithium hydroxide and the borate particles of the first particle size with each other and pre-sintering the mixture in a first temperature range and for a first time duration in S240; and sintering the pre-sintered mixture in a second temperature range and for a second time duration in S250, wherein the borate is provided in a form of powders, and the first particle size of the borate power may be in a range of 0.1 $\mu$m to 500 $\mu$m.

In the positive-electrode active material producing method according to this embodiment, in the step (S210) of preparing the metal solution, the metal solution including at least one of cobalt, manganese, and aluminum together with nickel may be prepared. In this connection, the metal solution may be provided to have one or more concentration ranges. For example, the metal solution may include a first metal solution composed of a metal combination using at least one of nickel, cobalt, manganese, and aluminum, and having a first concentration, and a second metal solution composed of a metal combination using at least one of nickel, cobalt, manganese, and aluminum, and having a second concentration different from the first concentration. Using the first metal solution and the second metal solution may allow the metal composite hydroxide in which at least one of nickel, cobalt, manganese, and aluminum has a concentration-gradient therein to be produced.

In the step (S220) of producing the metal composite hydroxide via the co-precipitation reaction, the metal composite hydroxide may be produced using the metal solution. The co-precipitation reaction may be performed by continuously introducing the metal solution, the ammonia solution, and the sodium hydroxide solution into a co-precipitation reactor at different rates, respectively. In this connection, controlling the input rates and the concentrations the metal solution, the ammonia solution and the sodium hydroxide solution may control the refined structure and shape of the primary particles and secondary particles made of the metal composite hydroxide. The co-precipitation reaction may be carried out at 20 °C to 60 °C, preferably at 22 °C to 47 °C. Further, the pH may be maintained at 10 to 12 while performing the co-precipitation reaction in the co-precipitation reactor.

Then, the produced metal composite hydroxide may be filtered to remove the liquid therefrom. After washing several times with distilled water, the metal composite hydroxide may be produced into powder form by drying the washed metal composite hydroxide in a vacuum dryer. The temperature of the vacuum dryer may be in a range of 100 °C to 160 °C, preferably 100 °C to 135 °C.

In the step (S230) of preparing the borate particles by crushing the borate into the particles of the first particle size, the borate particles may be prepared using solid borate ($B_2O_3$). The particle size of the borate particle may be controlled using a ball-mill, etc. For example, the first particle size of the borate particle may be in a range of 0.1 $\mu$m to 500 $\mu$m. When the first particle size is smaller than 0.1 $\mu$m, the borate particles may be agglomerated and thus may not be uniformly mixed with the metal composite hydroxide. When the size is larger than 500 $\mu$m, there may be a problem because the particle does not adhere to the metal composite hydroxide. Preferably, the first particle size may be in a range of 1 $\mu$m to 50 $\mu$m, more preferably 2 $\mu$m to 10 $\mu$m.

In the step (S240) of mixing the metal composite hydroxide, the lithium hydroxide and the borate particles, and pre-sintering the mixture, the metal composite hydroxide, the lithium hydroxide and the borate particles may be mixed first with each other. Thereafter, the pre-sintering may be performed on the mixture by heating the mixture in a first temperature range and for a first time duration. The pre-sintering may include applying heat at a relatively low temperature to the mixture before sintering the mixture at a high temperature, such that the electrochemical performance of the positive-electrode active material produced by the final sintering may be further improved. The first temperature range may be 350°C to 500°C, and the first time duration may be 3 hours to 8 hours. Since the preliminary sintering is performed within the first temperature range and for the first time duration, the refined structure of the positive-electrode active material is controlled by the subsequent sintering, such that electrical properties may be further improved. Further, the boron may control the crystallinity of the primary particles in the surface of the positive-electrode active material, such that the movement path of lithium ions may be formed more efficiently. Preferably, the first temperature range may be 400 °C to 500 °C, more preferably 410 °C to 480 °C. Further, preferably, the first time duration may be 3 hours to 7 hours, and more preferably 4 hours to 6 hours.

Subsequently, the step (S250) of sintering the pre-sintered mixture in a second temperature range and for a second time duration may be performed. Thus, the final positive-electrode active material doped with boron may be produced. The second temperature range may be 700°C to 1000°C, and the second time duration may be 8 hours to 15 hours. When the second temperature range of the sintering step (S250) is lower than 700°C, the primary particles constituting the secondary particle of the positive-electrode active material are not uniformly oriented. When the second temperature exceeds 1000°C, the material may partially evaporate, such that the process efficiency is lowered. Preferably, the second temperature range may be 1.8 times to 2.2 times of the first temperature range.

Hereinafter, Present Examples and Comparative Examples of the present disclosure are described. However, the following Examples are only preferred ones of the present disclosure, and the scope of the present disclosure is not limited to the following Examples.

1. Producing of Present Examples and Comparative Examples

(1) Production of NCM-based positive-electrode active material

Present Example 1 (NCM65-B1)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, each of a nickel sulfate aqueous solution ($NiSO_4 6H_2O$, Samchun Chemicals), a cobalt sulfate aqueous solution ($CoSO_4 7H_2O$, Samchun Chemicals), and a manganese sulfate aqueous solution ($MnSO_4 H_2O$, Samchun Chemicals) were mixed with each other at a molar ratio 65:15:20 of nickel (Ni), cobalt (Co) and manganese (Mn) to prepare a metal solution having a 2M concentration. The produced metal solution was continuously added to the reactor at 0.561 liter/hour, 16M concentration of ammonia solution ($NH_4OH$, JUNSEI) was continuously added thereto at 0.08 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni_{0.65}Co_{0.15}Mn_{0.2}(OH)_2$ metal composite hydroxide.

The produced $Ni_{0.65}Co_{0.15}Mn_{0.2}(OH)_2$ metal composite hydroxide was filtered and was washed several times with distilled water, and then was dried in a vacuum dryer at 110° C for 12 hours to produce powders. Borate ($B_2O_3$) was crushed to particles using a ball mill so that an average particle size thereof was 50 $\mu$m. The $Ni_{0.65}Co_{0.15}Mn_{0.2}(OH)_2$ metal composite hydroxide in a powder form, the borate ($B_2O_3$) particles, and lithium hydroxide (LiOH) were mixed with each other at a molar ratio of 0.99:0.005:1.01 to produce a mixture. Then, the mixture was heated at a temperature increase rate of 2°C/min, and was maintained at 450° C for 5 hours. In this way, preliminary sintering or pre-sintering was performed. Subsequently, the pre-sintered mixture was sintered at 820°C for 10 hours to produce positive-electrode active material powders (NCM65-B1) doped with boron (B) at 1 mol%. A content of each of elements of the produced positive-electrode active material powders was identified using ICP-OES (OPTIMA 8300, Perkin Elmer). Table 1 shows a B doping amount of the doping element, and a molar ratio of metal (nickel (Ni), cobalt (Co) and manganese (Mn)) to ammonia, and a sintering temperature in the process of producing the metal composite hydroxide.

Present Example 2 (NCM65-B1)

Positive-electrode active material powders (NCM65-B1) doped with 1 mol% boron (B) were produced in the same manner as in that of Present Example 1 except that in the process of producing the metal composite oxide, 16M concentration of ammonia solution ($NH_4OH$, JUNSEI) was continuously added into the co-precipitation reactor at 0.213 liters/hour to carry out the co-precipitation reaction. A content of each of elements of the produced positive-electrode active material powders was identified using ICP-OES (OPTIMA 8300, Perkin Elmer) and is shown in Table 1.

Comparative Example 1 (NCM65)

Positive-electrode active material powders (NCM65) not doped with boron (B) were produced in the same manner as in that of Present Example 1 except that the $Ni_{0.65}Co_{0.15}Mn_{0.2}(OH)2$ metal composite hydroxide produced in the powder form and lithium hydroxide (LiOH) were mixed with each other at a molar ratio of 1:1.01 and the mixture was pre-sintered. A content of each of elements of the produced positive-electrode active material powders was identified using ICP-OES (OPTIMA 8300, Perkin Elmer) and is shown in Table 1.

Present Example 3 (NCM90-B0.4)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, each of a nickel sulfate aqueous solution ($NiSO_4 6H_2O$, Samchun Chemicals), a cobalt sulfate aqueous solution ($CoSO_4 7H_2O$, Samchun Chemicals), and a manganese sulfate aqueous solution ($MnSO_4 H_2O$, Samchun Chemicals) were mixed with each other at a molar ratio 90:5:5 of nickel (Ni), cobalt (Co) and manganese (Mn) to prepare a metal solution having a 2M concentration. The produced metal solution was continuously added to the reactor at 0.561 liter/hour, 16M concentration of ammonia solution ($NH_4OH$, JUNSEI) was continuously added thereto at 0.08 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni_{0.9}Co_{0.05}Mn_{0.05}(OH)_2$ metal composite hydroxide.

The produced $Ni_{0.9}Co_{0.05}Mn_{0.05}(OH)_2$ metal composite hydroxide was filtered and was washed several times with distilled water, and then was dried in a vacuum dryer at 110° C for 12 hours to produce powders. Borate ($B_2O_3$) was crushed to particles using a ball mill so that an average particle size thereof was 50 μm. The $Ni_{0.9}Co_{0.05}Mn_{0.05}(OH)_2$ metal composite hydroxide in a powder form, the borate ($B_2O_3$) particles, and lithium hydroxide (LiOH) were mixed with each other at a molar ratio of 0.996:0.002:1.01 to produce a mixture. Then, the mixture was heated at a temperature increase rate of 2°C/min, and was maintained at 450° C for 5 hours. In this way, preliminary sintering or pre-sintering was performed. Subsequently, the pre-sintered mixture was sintered at 750°C for 10 hours to produce positive-electrode active material powders (NCM90-B0.4) doped with boron (B) at 0.4 mol%. A content of each of elements of the produced positive-electrode active material powders was identified using ICP-OES (OPTIMA 8300, Perkin Elmer). Table 1 shows a B doping amount of the doping element, and a molar ratio of metal (nickel (Ni), cobalt (Co) and manganese (Mn)) to ammonia, and a sintering temperature in the process of producing the metal composite hydroxide.

Present Example 4 (NCM90-B1)

Positive-electrode active material powders (NCM90-B1) doped with 1 mol% boron (B) were produced in the same manner as in that of Present Example 2 except that the $Ni_{0.9}Co_{0.05}Mn_{0.05}(OH)_2$ metal composite hydroxide in a powder form, the borate ($B_2O_3$) particles, and lithium hydroxide (LiOH) were mixed with each other at a molar ratio of 0.99:0.005:1.01 to produce a mixture. A content of each of elements of the produced positive-electrode active material powders was identified using ICP-OES (OPTIMA 8300, Perkin Elmer) and is shown in Table 1.

Present Example 5 (NCM90-B1)

Positive-electrode active material powders (NCM90-B1) doped with 1 mol% boron (B) were produced in the same manner as that in Present Example 3 except that in the process of producing the metal composite oxide, 16M concentration of ammonia solution ($NH_4OH$, JUNSEI) was continuously added into the reactor at 0.113 liters/hour to perform co-precipitation reaction, and the $Ni_{0.9}Co_{0.05}Mn_{0.05}(OH)_2$ metal composite hydroxide in a powder form, the borate ($B_2O_3$) particles, and lithium hydroxide (LiOH) were mixed with each other at a molar ratio of 0.99:0.005:1.01 to produce a mixture. A content of each of elements of the produced positive-electrode active material powders was identified using ICP-OES (OPTIMA 8300, Perkin Elmer) and is shown in Table 1.

Present Example 6 (NCM90-B1)

Positive-electrode active material powders (NCM90-B1) doped with 1 mol% boron (B) were produced in the same manner as that in Present Example 3 except that in the process of producing the metal composite oxide, 16M concentration of ammonia solution ($NH_4OH$, JUNSEI) was continuously added into the reactor at 0.146 liters/hour to perform co-precipitation reaction, and the $Ni_{0.9}Co_{0.05}Mn_{0.05}(OH)_2$ metal composite hydroxide in a powder form, the borate ($B_2O_3$) particles, and lithium hydroxide (LiOH) were mixed with each other at a molar ratio of 0.99:0.005:1.01 to produce a mixture. A content of each of elements of the produced positive-electrode active material powders was identified using ICP-OES (OPTIMA 8300, Perkin Elmer) and is shown in Table 1.

Present Example 7 (NCM90-B1)

Positive-electrode active material powders (NCM90-B1) doped with 1 mol% boron (B) were produced in the same manner as that in Present Example 3 except that in the process of producing the metal composite oxide, 16M concentration of ammonia solution ($NH_4OH$, JUNSEI) was continuously added into the reactor at 0.267 liters/hour to perform co-precipitation reaction, and the $Ni_{0.9}Co_{0.05}Mn_{0.05}(OH)_2$ metal composite hydroxide in a powder form, the borate ($B_2O_3$) particles, and lithium hydroxide (LiOH) were mixed with each other at a molar ratio of 0.99:0.005:1.01 to produce a mixture. A content of each of elements of the produced positive-electrode active material powders was identified using ICP-OES (OPTIMA 8300, Perkin Elmer) and is shown in Table 1.

Comparative Example 2 (NCM90)

Positive-electrode active material powders (NCM90) not doped with boron (B) were produced in the same manner as in that of Present Example 3 except that the $Ni_{0.9}Co_{0.05}Mn_{0.05}(OH)_2$ metal composite hydroxide produced in the powder form and lithium hydroxide (LiOH) were mixed with each other at a molar ratio of 1:1.01 and the mixture was pre-sintered. A content of each of elements of the produced positive-electrode active material powders was identified using ICP-OES (OPTIMA 8300, Perkin Elmer) and is shown in Table 1.

Present Example 8 (NCM92-B1)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, each of a nickel sulfate aqueous solution ($NiSO_46H_2O$, Samchun Chemicals), a cobalt sulfate aqueous solution ($CoSO_47H_2O$, Samchun Chemicals), and a manganese sulfate aqueous solution ($MnSO_4H_2O$, Samchun Chemicals) were mixed with each other at a molar ratio 92:4:4 of nickel (Ni), cobalt (Co) and manganese (Mn) to prepare a metal solution having a 2M concentration. The produced metal solution was continuously added to the reactor at 0.561 liter/hour, 16M concentration of ammonia solution ($NH_4OH$, JUNSEI) was continuously added thereto at 0.08 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni_{0.92}Co_{0.04}Mn_{0.04}(OH)_2$ metal composite hydroxide.

The produced $Ni_{0.92}Co_{0.04}Mn_{0.04}(OH)_2$ metal composite hydroxide was filtered and was washed several times with distilled water, and then was dried in a vacuum dryer at 110°C for 12 hours to produce powders. Borate ($B_2O_3$) was crushed to particles using a ball mill so that an average particle size thereof was 50 $\mu$m. The $Ni_{0.92}Co_{0.04}Mn_{0.04}(OH)_2$ metal composite hydroxide in a powder form, the borate ($B_2O_3$) particles, and lithium hydroxide (LiOH) were mixed with each other at a molar ratio of 0.99:0.005:1.01 to produce a mixture. Then, the mixture was heated at a temperature increase rate of 2°C/min, and was maintained at 450°C for 5 hours. In this way, preliminary sintering or pre-sintering was performed. Subsequently, the pre-sintered mixture was sintered at 730°C for 10 hours to produce positive-electrode active material powders (NCM92-B1) doped with boron (B) at 1 mol%. A content of each of elements of the produced positive-electrode active material powders was identified using ICP-OES (OPTIMA 8300, Perkin Elmer). Table 1 shows a B doping amount of the doping element, and a molar ratio of metal (nickel (Ni), cobalt (Co) and manganese (Mn)) to ammonia, and a sintering temperature in the process of producing the metal composite hydroxide.

Comparative Example 3 (NCM92)

Positive-electrode active material powders (NCM92) not doped with boron (B) were produced in the same manner as in that of Present Example 8 except that the $Ni_{0.92}Co_{0.04}Mn_{0.04}(OH)_2$ metal composite hydroxide produced in the powder form and lithium hydroxide (LiOH) were mixed with each other at a molar ratio of 1:1.01 and the mixture was pre-sintered. A content of each of elements of the produced positive-electrode active material powders was identified using ICP-OES (OPTIMA 8300, Perkin Elmer) and is shown in Table 1.

[Table 1]

| Examples | Chemical Formula of Positive-electrode active material powder | Chemical composition analyzed via ICP-OES | B doping [mol%] | Molar ratio of ammonia to metal | Sintering temperature [°C] |
|---|---|---|---|---|---|
| Comparative Example 1 | $Li_{1.01}Ni_{0.65}Co_{0.13}Mn_{0.22}O_2$ | $Ni_{0.649}Co_{0.127}Mn_{0.224}$ | 0 | 1.2 | 820 |
| Present Example 1 | $Li_{1.01}B_{0.01}Ni_{0.65}Co_{0.13}Mn_{0.22}O_2$ | $Ni_{0.642}Co_{0.128}Mn_{0.221}B_{0.009}$ | 1.0 | 1.2 | 820 |
| Present Example 2 | $Li_{1.01}B_{0.01}Ni_{0.65}Co_{0.13}Mn_{0.22}O_2$ | $Ni_{0.645}Co_{0.131}Mn_{0.214}B_{0.01}$ | 1.0 | 3.2 | 820 |
| Comparative Example 2 | $Li_{1.01}Ni_{0.90}Co_{0.05}Mn_{0.05}O_2$ | $Ni_{0.903}Co_{0.047}Mn_{0.05}$ | 0 | 1.2 | 750 |
| Present Example 3 | $Li_{1.01}B_{0.004}Ni_{0.90}Co_{0.05}Mn_{0.05}O_2$ | $Ni_{0.90}Co_{0.048}Mn_{0.048}B_{0.004}$ | 0.4 | 1.2 | 750 |
| Present Example 4 | $Li_{1.01}B_{0.01}Ni_{0.90}Co_{0.05}Mn_{0.05}O_2$ | $Ni_{0.8905}Co_{0.055}Mn_{0.054}B_{0.0105}$ | 1.0 | 1.2 | 750 |
| Present Example 5 | $Li_{1.01}B_{0.01}Ni_{0.90}Co_{0.05}Mn_{0.05}O_2$ | $Ni_{0.90}Co_{0.05}Mn_{0.05}B_{0.01}$ | 1.0 | 1.7 | 750 |
| Present Example 6 | $Li_{1.01}B_{0.01}Ni_{0.90}Co_{0.05}Mn_{0.05}O_2$ | $Ni_{0.889}Co_{0.05}Mn_{0.05}B_{0.011}$ | 1.0 | 2.2 | 750 |
| Present Example 7 | $Li_{1.01}B_{0.01}Ni_{0.90}Co_{0.05}Mn_{0.05}O_2$ | $Ni_{0.90}Co_{0.05}Mn_{0.05}B_{0.01}$ | 1.0 | 4.0 | 750 |
| Comparative Example 3 | $Li_{1.01}Ni_{0.92}Co_{0.04}Mn_{0.04}O_2$ | $Ni_{0.921}Co_{0.039}Mn_{0.04}$ | 0 | 1.2 | 730 |
| Present Example 8 | $Li_{1.01}B_{0.01}Ni_{0.92}Co_{0.04}Mn_{0.04}O_2$ | $Ni_{0.91}Co_{0.041}Mn_{0.039}B_{0.01}$ | 1.0 | 1.2 | 730 |

(2) Production of LNO-based positive-electrode active material

Present Example 9 (LNO-B1)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, a nickel sulfate aqueous solution ($NiSO_4 6H_2O$, Samchun Chemicals) was mixed with the distilled water to prepare a metal solution having a 2M concentration. The produced metal solution was continuously added to the reactor at 0.561 liter/hour, 16M concentration of ammonia solution ($NH_4OH$, JUNSEI) was continuously added thereto at 0.067 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni(OH)_2$ metal composite hydroxide.

The produced $Ni(OH)_2$ metal composite hydroxide was filtered and was washed several times with distilled water, and then was dried in a vacuum dryer at 110° C for 12 hours to produce powders. Borate ($B_2O_3$) was crushed to particles using a ball mill so that an average particle size thereof was 50 $\mu$m. The $Ni(OH)_2$ metal composite hydroxide in a powder form, the borate ($B_2O_3$) particles, and lithium hydroxide (LiOH) were mixed with each other at a molar ratio of 0.99:0.005:1.01 to produce a mixture. Then, the mixture was heated at a temperature increase rate of 2°C/min, and was maintained at 450° C for 5 hours. In this way, preliminary sintering or pre-sintering was performed. Subsequently, the pre-sintered mixture was sintered at 650°C for 10 hours to produce positive-electrode active material powders (LNO-B1) doped with boron (B) at 1 mol%. A content of each of elements of the produced positive-electrode active material powders was identified using ICP-OES (OPTIMA 8300, Perkin Elmer). Table 1 shows a B doping amount of the doping element, and a molar ratio of metal (nickel (Ni)) to ammonia, and a sintering temperature in the process of producing the metal composite hydroxide.

Present Example 10 (LNO-B1)

Positive-electrode active material powders (LNO-B1) doped with 1 mol% boron (B) were produced in the same manner as that in Present Example 9 except that in the process of producing the metal composite oxide, 16M concentration of ammonia solution ($NH_4OH$, JUNSEI) is continuously added into the co-precipitation reactor at 0.13 liters/hour to carry out the co-precipitation reaction. A content of each of elements of the produced positive-electrode active material powders was identified using ICP-OES (OPTIMA 8300, Perkin Elmer) and is shown in Table 2.

Present Example 11 (LNO-B1)

Positive-electrode active material powders (LNO-B1) doped with 1 mol% boron (B) were produced in the same manner as that in Present Example 9 except that in the process of producing the metal composite oxide, 16M concentration of ammonia solution ($NH_4OH$, JUNSEI) was continuously added into the co-precipitation reactor at 0.2 liters/hour to carry out the co-precipitation reaction. A content of each of elements of the produced positive-electrode active material powders was identified using ICP-OES (OPTIMA 8300, Perkin Elmer) and is shown in Table 2.

Present Example 12 (LNO-B1)

Positive-electrode active material powders (LNO-B1) doped with 1 mol% boron (B) were produced in the same manner as that in Present Example 9 except that in the process of producing the metal composite oxide, 16M concentration of ammonia solution ($NH_4OH$, JUNSEI) was continuously added into the co-precipitation reactor at 0.26 liters/hour to carry out the co-precipitation reaction. A content of each of elements of the produced positive-electrode active material powders was identified using ICP-OES (OPTIMA 8300, Perkin Elmer) and is shown in Table 2.

Comparative Example 4 (LNO)

Positive-electrode active material powders (LNO) not doped with boron (B) were produced in the same manner as in Present Example 9 except that in the process of producing the metal composite oxide, 16M concentration of ammonia solution ($NH_4OH$, JUNSEI) was continuously added into the co-precipitation reactor at 0.067 liters/hour to perform co-precipitation reaction and the $Ni(OH)_2$ metal composite hydroxide produced in the powder form and the lithium hydroxide (LiOH) were mixed with each other at a molar ratio of 1:1.01. A content of each of elements of the produced positive-electrode active material powders was identified using ICP-OES (OPTIMA 8300, Perkin Elmer) and is shown in Table 2.

[Table 2]

| Examples | Chemical Formula of Positive-electrode active material powder | Chemical composition analyzed via ICP-OES | B doping [mol%] | Molar ratio of ammonia to metal | Sintering temperature [°C ] |
|---|---|---|---|---|---|
| Comparative Example 4 | $Li_{1.01}NiO_2$ | $Ni_{1.00}$ | 0 | 1.0 | 650 |
| Present Example 9 | $Li_{1.01}B_{0.01}NiO_2$ | $Ni_{0.991}B_{0.009}$ | 1.0 | 1.0 | 650 |
| Present Example 10 | $Li_{1.01}B_{0.01}NiO_2$ | $Ni_{0.99}B_{0.01}$ | 1.0 | 2.0 | 650 |
| Present Example 11 | $Li_{1.01}B_{0.01}NiO_2$ | $Ni_{0.991}B_{0.009}$ | 1.0 | 3.0 | 650 |
| Present Example 12 | $Li_{1.01}B_{0.01}NiO_2$ | $Ni_{0.991}B_{0.009}$ | 1.0 | 4.0 | 650 |

(3) Production of NCO-based positive-electrode active material

Present Example 13 (NCO90-B0.05)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, a nickel sulfate aqueous solution ($NiSO_4 6H_2O$, Samchun Chemicals) and a cobalt sulfate aqueous solution ($CoSO_4 7H_2O$, Samchun Chemicals) were mixed with each other in a molar ratio 9:1 of nickel (Ni) and cobalt (Co) to prepare a metal solution having a 2M concentration. The produced metal solution was continuously added to the reactor at 0.561 liter/hour, 16M concentration of ammonia solution ($NH_4OH$, JUNSEI) was continuously added thereto at 0.11 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni_{0.9}Co_{0.1}(OH)_2$ metal composite hydroxide.

The produced $Ni_{0.9}Co_{0.1}(OH)_2$ metal composite hydroxide was filtered and was washed several times with distilled water, and then was dried in a vacuum dryer at 110° C for 12 hours to produce powders. Borate ($B_2O_3$) was crushed to particles using a ball mill so that an average particle size thereof was 50 μm. The $Ni_{0.9}Co_{0.1}(OH)_2$ metal composite hydroxide in a powder form, the borate ($B_2O_3$) particles, and lithium hydroxide (LiOH) were mixed with each other at a molar ratio of 0.9995:0.00025:1.01 to produce a mixture. Then, the mixture was heated at a temperature increase rate of 2°C/min, and was maintained at 450° C for 5 hours. In this way, preliminary sintering or pre-sintering was performed. Subsequently, the pre-sintered mixture was sintered at 730°C for 10 hours to produce positive-electrode active material powders (NCO90-B0.05) doped with boron (B) at 0.05 mol%. A content of each of elements of the produced positive-electrode active material powders was identified using ICP-OES (OPTIMA 8300, Perkin Elmer). Table 3 shows a B doping amount of the doping element, and a molar ratio of metal (nickel (Ni) and cobalt (Co)) to ammonia, and a sintering temperature in the process of producing the metal composite hydroxide.

Present Example 14 (NCO90-B0.1)

Positive-electrode active material powders (NCO90-B0.1) doped with boron (B) at 0.1 mol% were produced in the same manner as that in Present Example 13 except that the $Ni_{0.9}Co_{0.1}(OH)_2$ metal composite hydroxide in a powder form, the borate ($B_2O_3$) particles, and lithium hydroxide (LiOH) were mixed with each other at a molar ratio of 0.999:0.0005:1.01. A content of each of elements of the produced positive-electrode active material powders was identified using ICP-OES (OPTIMA 8300, Perkin Elmer) and is shown in Table 3.

Present Example 15 (NCO90-B0.5)

Positive-electrode active material powders (NCO90-B0.5) doped with boron (B) at 0.5 mol% were produced in the same manner as that in Present Example 13 except that the $Ni_{0.9}Co_{0.1}(OH)_2$ metal composite hydroxide in a powder form, the borate ($B_2O_3$) particles, and lithium hydroxide (LiOH) were mixed with each other at a molar ratio of 0.995:0.0025:1.01. A content of each of elements of the produced positive-electrode active material powders was identified using ICP-OES (OPTIMA 8300, Perkin Elmer) and is shown in Table 3.

Present Example 16 (NCO90-B1)

Positive-electrode active material powders (NCO90-B1) doped with boron (B) at 1 mol% were produced in the same manner as that in Present Example 13 except that the $Ni_{0.9}Co_{0.1}(OH)_2$ metal composite hydroxide in a powder form, the borate ($B_2O_3$) particles, and lithium hydroxide (LiOH) were mixed with each other at a molar ratio of 0.99:0.005:1.01. A content of each of elements of the produced positive-electrode active material powders was identified using ICP-OES (OPTIMA 8300, Perkin Elmer) and is shown in Table 3.

Present Example 17 (NCO90-B1.5)

Positive-electrode active material powders (NCO90-B1.5) doped with boron (B) at 1.5 mol% were produced in the same manner as that in Present Example 13 except that the $Ni_{0.9}Co_{0.1}(OH)_2$ metal composite hydroxide in a powder form, the borate ($B_2O_3$) particles, and lithium hydroxide (LiOH) were mixed with each other at a molar ratio of 0.985:0.0075:1.01. A content of each of elements of the produced positive-electrode active material powders was identified using ICP-OES (OPTIMA 8300, Perkin Elmer) and is shown in Table 3.

Present Example 18 (NCO90-B2)

Positive-electrode active material powders (NCO90-B2) doped with boron (B) at 2 mol% were produced in the same manner as that in Present Example 13 except that the $Ni_{0.9}Co_{0.1}(OH)_2$ metal composite hydroxide in a powder form, the borate ($B_2O_3$) particles, and lithium hydroxide (LiOH) were mixed with each other at a molar ratio of 0.98:0.01:1.01. A content of each of elements of the produced positive-electrode active material powders was identified using ICP-OES (OPTIMA 8300, Perkin Elmer) and is shown in Table 3.

Present Example 19 (NCO90-B3)

Positive-electrode active material powders (NCO90-B3) doped with boron (B) at 3 mol% were produced in the same manner as that in Present Example 13 except that the $Ni_{0.9}Co_{0.1}(OH)_2$ metal composite hydroxide in a powder form, the borate ($B_2O_3$) particles, and lithium hydroxide (LiOH) were mixed with each other at a molar ratio of 0.97:0.015:1.01. A content of each of elements of the produced positive-electrode active material powders was identified using ICP-OES (OPTIMA 8300, Perkin Elmer) and is shown in Table 3.

Present Example 20 (NCO90-B4)

Positive-electrode active material powders (NCO90-B4) doped with boron (B) at 4 mol% were produced in the same manner as that in Present Example 13 except that the $Ni_{0.9}Co_{0.1}(OH)_2$ metal composite hydroxide in a powder form, the borate ($B_2O_3$) particles, and lithium hydroxide (LiOH) were mixed with each other at a molar ratio of 0.96:0.02:1.01. A content of each of elements of the produced positive-electrode active material powders was identified using ICP-OES (OPTIMA 8300, Perkin Elmer) and is shown in Table 3.

Present Example 21 (NCO90-B5)

Positive-electrode active material powders (NCO90-B5) doped with boron (B) at 5 mol% were produced in the same manner as that in Present Example 13 except that the $Ni_{0.9}Co_{0.1}(OH)_2$ metal composite hydroxide in a powder form, the borate ($B_2O_3$) particles, and lithium hydroxide (LiOH) were mixed with each other at a molar ratio of 0.95:0.025:1.01. A content of each of elements of the produced positive-electrode active material powders was identified using ICP-OES (OPTIMA 8300, Perkin Elmer) and is shown in Table 3.

Present Example 22 (NCO90-B0.5,Mo0.5)

Positive-electrode active material powders (NCO90-B0.5,Mo0.5) doped with boron (B) at 0.5 mol% and molybdenum (Mo) and at 0.5 mol% were produced were produced in the same manner as that in Present Example 13 except that the $Ni_{0.9}Co_{0.1}(OH)_2$ metal composite hydroxide in a powder form, molybdenum trioxide ($MoO_3$), the borate particles ($B_2O_3$), and lithium hydroxide (LiOH) were mixed with each other at a molar ratio of 0.99:0.005:0.0025:1.01. A content of each of elements of the produced positive-electrode active material powders was identified using ICP-OES (OPTIMA 8300, Perkin Elmer) and is shown in Table 3.

Comparative Example 5 (NCO90)

Positive-electrode active material powders (NCO90) not doped with boron (B) were produced in the same manner as in Present Example 13 except that the $Ni_{0.9}Co_{0.1}(OH)_2$ metal composite hydroxide in a powder form, and lithium hydroxide (LiOH) were mixed with each other at a molar ratio of 1:1.01. A content of each of elements of the produced positive-electrode active material powders was identified using ICP-OES (OPTIMA 8300, Perkin Elmer) and is shown in Table 3.

Comparative Example 6 (NCO90-B7)

Positive-electrode active material powders (NCO90-B7) doped with 7 mol% boron (B) were produced in the same manner as that in Present Example 13 except that the $Ni_{0.9}Co_{0.1}(OH)_2$ metal composite hydroxide in a powder form, the borate particles ($B_2O_3$), and lithium hydroxide (LiOH) were mixed with each other at a molar ratio of 0.93:0.035:1.01. A content of each of elements of the produced positive-electrode active material powders was identified using ICP-OES (OPTIMA 8300, Perkin Elmer) and is shown in Table 3.

[Table 3]

| Example s | Chemical Formula of Positive-electrode active material powder | Chemical composition analyzed via ICP-OES | B doping [mol%] | Molar ratio of ammonia to metal | Sintering temperature [°C] |
|---|---|---|---|---|---|
| Compara tive Example 5 | $Li_{1.01}Ni_{0.9}Co_{0.10}O_2$ | $Ni_{0.902}Co_{0.098}$ | 0 | 1.7 | 730 |
| Present Example 13 | $Li_{1.01}B_{0.0005}Ni_{0.9}Co_{0.10}O_2$ | $Ni_{0.899}Co_{0.1}B_{0.0006}$ | 0.05 | 1.7 | 730 |
| Present Example 14 | $Li_{1.01}B_{0.001}Ni_{0.9}Co_{0.10}O_2$ | $Ni_{0.90}Co_{0.1}B_{0.001}$ | 0.1 | 1.7 | 730 |
| Present Example 15 | $Li_{1.01}B_{0.005}Ni_{0.9}Co_{0.10}O_2$ | $Ni_{0.90}Co_{0.1}B_{0.005}$ | 0.5 | 1.7 | 730 |
| Present Example 16 | $Li_{1.01}B_{0.01}Ni_{0.9}Co_{0.10}O_2$ | $Ni_{0.90}Co_{0.1}B_{0.01}$ | 1 | 1.7 | 730 |
| Present Example 17 | $Li_{1.01}B_{0.015}Ni_{0.9}Co_{0.10}O_2$ | $Ni_{0.90}Co_{0.1}B_{0.015}$ | 1.5 | 1.7 | 730 |
| Present Example 18 | $Li_{1.01}B_{0.02}Ni_{0.9}Co_{0.10}O_2$ | $Ni_{0.90}Co_{0.1}B_{0.02}$ | 2 | 1.7 | 730 |
| Present Example 19 | $Li_{1.01}B_{0.03}Ni_{0.9}Co_{0.10}O_2$ | $Ni_{0.90}Co_{0.1}B_{0.03}$ | 3 | 1.7 | 730 |
| Present Example 20 | $Li_{1.01}B_{0.04}Ni_{0.9}Co_{0.10}O_2$ | $Ni_{0.90}Co_{0.1}B_{0.04}$ | 4 | 1.7 | 730 |
| Present Example 21 | $Li_{1.01}B_{0.05}Ni_{0.9}Co_{0.10}O_2$ | $Ni_{0.90}Co_{0.1}B_{0.051}$ | 5 | 1.7 | 730 |
| Compara tive Example 6 | $Li_{1.01}B_{0.07}Ni_{0.9}Co_{0.10}O_2$ | $Ni_{0.902}Co_{0.998}B_{0.073}$ | 7 | 1.7 | 730 |
| Present Example 22 | $Li_{1.01}B_{0.005}Ni_{0.895}Co_{0.10}Mo_{0.005}O_2$ | $Ni_{0.894}Co_{0.101}B_{0.005}Mo_{0.005}$ | 0.5 (+Mo 0.5) | 1.7 | 730 |

(4) Producing of NCA-based positive-electrode active material

Present Example 23 (NCA88.5-B0.5)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, a nickel sulfate aqueous solution ($NiSO_46H_2O$, Samchun Chemicals) and a cobalt sulfate aqueous solution ($CoSO_47H_2O$, Samchun Chemicals) were mixed with each other in a molar ratio 9:1 of nickel (Ni) and cobalt (Co) to prepare a metal solution having a 2M concentration. The produced metal solution was continuously added to the reactor at 0.561 liter/hour, 16M concentration of ammonia solution ($NH_4OH$, JUNSEI) was continuously added thereto at 0.08 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni_{0.9}Co_{0.1}(OH)_2$ metal composite hydroxide.

The produced $Ni_{0.9}Co_{0.1}(OH)_2$ metal composite hydroxide was filtered and was washed several times with distilled water, and then was dried in a vacuum dryer at 110° C for 12 hours to produce powders. Borate ($B_2O_3$) was crushed to particles using a ball mill so that an average particle size thereof was 50 μm. The $Ni_{0.9}Co_{0.1}(OH)_2$ metal composite hydroxide in a powder form, aluminum hydroxide ($Al(OH)_3$), the borate ($B_2O_3$) particles, and lithium hydroxide (LiOH) were mixed with each other at a molar ratio of 0.98:0.015:0.0025:1.01 to produce a mixture. Then, the mixture was heated at a temperature increase rate of 2°C/min, and was maintained at 450° C for 5 hours. In this way, preliminary sintering or pre-sintering was performed. Subsequently, the pre-sintered mixture was sintered at 730°C for 10 hours to produce positive-electrode active material powders (NCA88.5-B0.5) doped with boron (B) at 0.5 mol%. A content of each of elements of the produced positive-electrode active material powders was identified using ICP-OES (OPTIMA 8300, Perkin Elmer). Table 4 shows a B doping amount of the doping element, and a molar ratio of metal (nickel (Ni) and cobalt (Co)) to ammonia, and a sintering temperature in the process of producing the metal composite hydroxide.

Present Example 24 (NCA88.5-B1)

Positive-electrode active material powders (NCA88.5-B1) doped with 1 mol% boron (B) were produced in the same manner as that in Present Example 23 except that the $Ni_{0.9}Co_{0.1}(OH)_2$ metal composite hydroxide in a powder form, aluminum hydroxide ($Al(OH)_3$), the borate ($B_2O_3$) particles, and lithium hydroxide (LiOH) were mixed with each other at a molar ratio of 0.975:0.015:0.005:1.01. A content of each of elements of the produced positive-electrode active material powders was identified using ICP-OES (OPTIMA 8300, Perkin Elmer) and is shown in Table 4.

Comparative Example 6 (NCA88.5)

Positive-electrode active material powders (NCA88.5) not doped with boron (B) were produced in the same manner as that in Present Example 23 except that the $Ni_{0.9}Co_{0.1}(OH)_2$ metal composite hydroxide in a powder form, aluminum hydroxide ($Al(OH)_3$), and lithium hydroxide (LiOH) were mixed with each other at a molar ratio of 0.985:0.015:1.01. A content of each of elements of the produced positive-electrode active material powders was identified using ICP-OES (OPTIMA 8300, Perkin Elmer) and is shown in Table 4.

Present Example 25 (NCA80-B1)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, a nickel sulfate aqueous solution ($NiSO_46H_2O$, Samchun Chemicals) and a cobalt sulfate aqueous solution ($CoSO_47H_2O$, Samchun Chemicals) were mixed with each other in a molar ratio 83:17 of nickel (Ni) and cobalt (Co) to prepare a metal solution having a 2M concentration. The produced metal solution was continuously added to the reactor at 0.561 liter/hour, 16M concentration of ammonia solution ($NH_4OH$, JUNSEI) was continuously added thereto at 0.08 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni_{0.83}Co_{0.17}(OH)_2$ metal composite hydroxide.

The produced $Ni_{0.83}Co_{0.17}(OH)_2$ metal composite hydroxide was filtered and was washed several times with distilled water, and then was dried in a vacuum dryer at 110° C for 12 hours to produce powders. Borate ($B_2O_3$) was crushed to particles using a ball mill so that an average particle size thereof was 50 μm. The $Ni_{0.83}Co_{0.17}(OH)_2$ metal composite hydroxide in a powder form, aluminum hydroxide ($Al(OH)_3$), the borate ($B_2O_3$) particles, and lithium hydroxide (LiOH) were mixed with each other at a molar ratio of 0.95:0.04:0.005:1.01 to produce a mixture. Then, the mixture was heated at a temperature increase rate of 2°C/min, and was maintained at 450° C for 5 hours. In this way, preliminary sintering or pre-sintering was performed. Subsequently, the pre-sintered mixture was sintered at 750°C for 10 hours to produce positive-electrode active material powders (NCA80-B1) doped with boron (B) at 1 mol%. A content of each of elements of the produced positive-electrode active material powders was identified using ICP-OES (OPTIMA 8300, Perkin Elmer). Table 4 shows a B doping amount of the doping element, and a molar ratio of metal (nickel (Ni) and cobalt (Co)) to ammonia, and a sintering temperature in the process of producing the metal composite hydroxide.

Comparative Example 8 (NCA80)

Positive-electrode active material powders (NCA88.5) not doped with boron (B) were produced in the same manner as that in Present Example 25 except that the $Ni_{0.83}Co_{0.17}(OH)_2$ metal composite hydroxide in a powder form, aluminum hydroxide ($Al(OH)_3$), and lithium hydroxide (LiOH) were mixed with each other at a molar ratio of .96:0.04:1.01. A content of each of elements of the produced positive-electrode active material powders was identified using ICP-OES (OPTIMA 8300, Perkin Elmer) and is shown in Table 4.

[Table 4]

| Examples | Chemical Formula of Positive-electrode active material powder | Chemical composition analyzed via ICP-OES | B doping [mol%] | Molar ratio of ammonia to metal | Sintering temperature [°C] |
|---|---|---|---|---|---|
| Comparative Example 7 | $Li_{1.01}Ni_{0.885}Co_{0.10}Al_{0.015}O_2$ | $Ni_{0.885}Co_{0.1}Al_{0.015}$ | 0 | 1.2 | 730 |
| Present Example 23 | $Li_{1.01}B_{0.005}Ni_{0.885}Co_{0.10}Al_{0.015}O_2$ | $Ni_{0.883}Co_{0.098}Al_{0.015}B_{0.004}$ | 0.5 | 1.2 | 730 |
| Present Example 24 | $Li_{1.01}B_{0.01}Ni_{0.885}Co_{0.10}Al_{0.015}O2$ | $Ni_{0.876}Co_{0.099}Al_{0.015}B_{0.01}$ | 1 | 1.2 | 730 |
| Comparative Example 8 | $Li_{1.01}Ni_{0.80}Co_{0.i6}Al_{0.04}O_2$ | $Ni_{0.795}Co_{0.i65}Al_{0.04}$ | 0 | 1.2 | 750 |
| Present Example 25 | $Li_{1.01}B_{0.01}Ni_{0.80}Co_{0.16}Al_{0.04}O_2$ | $Ni_{0.79}Co_{0.157}Al_{0.04}3B_{0.01}$ | 1 | 1.2 | 750 |

(5) Production of NMO-based positive-electrode active material

Present Example 26 (NMO90-B0.5)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, a nickel sulfate aqueous solution ($NiSO_4 6H_2O$, Samchun Chemicals) and a manganese sulfate aqueous solution ($MnSO_4 H2O$, Samchun Chemicals) were mixed with each other in a molar ratio 9:1 of nickel (Ni) and manganese (Mn) to prepare a metal solution having a 2M concentration. The produced metal solution was continuously added to the reactor at 0.561 liter/hour, 16M concentration of ammonia solution ($NH_4OH$, JUNSEI) was continuously added thereto at 0.08 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni_{0.9}Mn_{0.1}(OH)_2$ metal composite hydroxide.

The produced $Ni_{0.9}Mn_{0.1}(OH)_2$ metal composite hydroxide was filtered and was washed several times with distilled water, and then was dried in a vacuum dryer at 110° C for 12 hours to produce powders. Borate ($B_2O_3$) was crushed to particles using a ball mill so that an average particle size thereof was 50 $\mu$m. The $Ni_{0.9}Mn_{0.1}(OH)_2$ metal composite hydroxide in a powder form, the borate ($B_2O_3$) particles, and lithium hydroxide (LiOH) were mixed with each other at a molar ratio of 0.995:0.0025:1.01 to produce a mixture. Then, the mixture was heated at a temperature increase rate of 2°C/min, and was maintained at 450° C for 5 hours. In this way, preliminary sintering or pre-sintering was performed. Subsequently, the pre-sintered mixture was sintered at 770°C for 10 hours to produce positive-electrode active material powders (NMO90-B0.5) doped with boron (B) at 0.5 mol%. A content of each of elements of the produced positive-electrode active material powders was identified using ICP-OES (OPTIMA 8300, Perkin Elmer). Table 5 shows a B doping amount of the doping element, and a molar ratio of metal (nickel (Ni) and manganese (Mn)) to ammonia, and a sintering temperature in the process of producing the metal composite hydroxide.

Present Example 27 (NMO90-B1)

Positive-electrode active material powders (NMO90-B1) doped with 1 mol% boron (B) were produced in the same manner as that in Present Example 26 except that the $Ni_{0.9}Mn_{0.1}(OH)_2$ metal composite hydroxide in a powder form, the borate ($B_2O_3$) particles, and lithium hydroxide (LiOH) were mixed with each other at a molar ratio of 0.99:0.005:1.01. A content of each of elements of the produced positive-electrode active material powders was identified using ICP-OES (OPTIMA 8300, Perkin Elmer) and is shown in Table 5.

Comparative Example 9 (NMO90)

Positive-electrode active material powders (NMO90) not doped with boron (B) were produced in the same manner as that in Present Example 26 except that the $Ni_{0.9}Mn_{0.1}(OH)_2$ metal composite hydroxide in a powder form, and lithium hydroxide (LiOH) were mixed with each other at a molar ratio of 1:1.01. A content of each of elements of the produced positive-electrode active material powders was identified using ICP-OES (OPTIMA 8300, Perkin Elmer) and is shown in Table 5.
[Table 5]

| Examples | Chemical Formula of Positive-electrode active material powder | Chemical composition analyzed via ICP-OES | B doping [mol%] | Molar ratio of ammonia to metal | Sintering temperature [°C ] |
|---|---|---|---|---|---|
| Comparative Example 9 | $Li_{1.01}Ni_{0.9}Mn_{0.10}O_2$ | $Ni_{0.90}Mn_{0.1}$ | 0 | 1.2 | 770 |
| Present Example 26 | $Li_{1.01}B_{0.005}Ni_{0.9}Mn_{0.10}O_2$ | $Ni_{0.895}Mn_{0.1}B_{0.005}$ | 0.5 | 1.2 | 770 |
| Present Example 27 | $Li_{1.01}B_{0.01}Ni_{0.9}Mn_{0.10}O_2$ | $Ni_{0.895}Mn_{0.095}B_{0.01}$ | 1.0 | 1.2 | 770 |

(6) Production of concentration-gradient positive-electrode active material

Present Example 28 (gradient NCM89-B1)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, a nickel sulfate aqueous solution ($NiSO_46H_2O$, Samchun Chemicals), a cobalt sulfate aqueous solution ($CoSO_47H_2O$, Samchun Chemicals), and a manganese sulfate aqueous solution ($MnSO_4H_2O$, Samchun Chemicals) were mixed with each other such that a molar ratio of nickel (Ni), cobalt (Co) and manganese (Mn) was 100:0:0, thereby preparing a first metal solution of 2M concentration. Further, a nickel sulfate aqueous solution ($MSO_46H_2O$, Samchun Chemicals), a cobalt sulfate aqueous solution ($CoSO_47H_2O$, Samchun Chemicals), and a manganese sulfate aqueous solution ($MnSO_4H_2O$, Samchun Chemicals) were mixed with each other such that a molar ratio of nickel (Ni), cobalt (Co) and manganese (Mn) was 80:16:04, thereby preparing a second metal solution of 2M concentration. The produced first metal solution was continuously added to the reactor at 0.561 liter/hour, 16M concentration of ammonia solution ($NH_4OH$, JUNSEI) was continuously added thereto at 0.08 liter/hour, and 4M concentration of sodium hydroxide solution (NaOH, Samchun Chemicals) was continuously added to the reactor at 0.60 liters/hour, for 14 hours. Thus, a first concentration maintaining portion was prepared. Thereafter, the second metal solution was added to a first metal solution bath at 0.561 liters/hour. In this connection, while a concentration of the metal solution fed into the reactor was constantly changed, the metal solution was continuously input the reactor for 10 hours such that a second concentration-gradient portion was produced on an outside of the first concentration maintaining portion. Thereafter, the input of the second metal solution into the first metal solution was terminated. Only the first metal solution having the changed concentration was put into the reactor at 0.561 liters/hour to produce a third concentration maintaining portion on an outside of the second concentration-gradient portion. The co-precipitation reaction was performed while maintaining the pH in the reactor in a range of 10 to 12 to produce a concentration-gradient metal composite hydroxide having an average composition of $Ni_{0.90}Co_{0.08}Mn_{0.02}(OH)_2$.

The produced $Ni_{0.90}Co_{0.08}Mn_{0.02}(OH)_2$ concentration-gradient metal composite hydroxide was filtered, and was washed several times with distilled water, and then was dried in a vacuum dryer at 110° C for 12 hours to produce powders. Borate ($B_2O_3$) was crushed to particles using a ball mill so that an average particle size thereof was 50 $\mu$m. Then, the $Ni_{0.90}Co_{0.08}Mn_{0.02}(OH)_2$ concentration-gradient metal composite hydroxide produced in the powder form, the borate particles ($B_2O_3$), and lithium hydroxide (LiOH) were mixed with each other at a molar ratio of 0.99:0.005:1.01 to produce a mixture. Then, the mixture was heated at a temperature increase rate of 2°C/min, and was maintained at 450° C for 5 hours. In this way, preliminary sintering or pre-sintering was performed. Subsequently, the pre-sintered mixture was sintered at 820°C for 10 hours to produce positive-electrode active material powders (gradient NCM89-B1) doped with boron (B) at 1 mol%. A content of each of elements of the produced positive-electrode active material powders was identified using ICP-OES (OPTIMA 8300, Perkin Elmer). Table 6 shows a B doping amount of the doping element, and a molar ratio of metal (nickel (Ni), cobalt (Co) and manganese (Mn)) to ammonia, and a sintering temperature in the process of producing the metal composite hydroxide.

Comparative Example 10 (NCM90)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, a nickel sulfate aqueous solution ($MSO_46H_2O$, Samchun Chemicals), a cobalt sulfate aqueous solution ($CoSO_47H_2O$, Samchun Chemicals), and a manganese sulfate aqueous solution ($MnSO_4H_2O$, Samchun Chemicals) were mixed with each other such that a molar ratio of nickel (Ni), cobalt (Co) and manganese (Mn) was 90:8:2, thereby preparing a metal solution of 2M concentration. The produced metal solution was continuously added to the reactor at 0.561 liter/hour, 16M concentration of ammonia solution ($NH_4OH$, JUNSEI) was continuously added thereto at 0.08 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni_{0.90}Co_{0.08}Mn_{0.02}(OH)_2$ metal composite hydroxide.

Then, positive-electrode active material powders (NCM90) not doped with boron (B) were produced in the same manner as that in Present Example 28 except that the produced $Ni_{0.90}Co_{0.08}Mn_{0.02}(OH)_2$ metal composite hydroxide in the power form and lithium hydroxide (LiOH) were mixed with each other at a molar ratio of 1:1.01. A content of each of elements of the produced positive-electrode active material powders was identified using ICP-OES (OPTIMA 8300, Perkin Elmer) and is shown in Table 6.

Present Example 29 (gradient NCA88.5-B1)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, a nickel sulfate aqueous solution ($NiSO_4 6H_2O$, Samchun Chemicals), and a cobalt sulfate aqueous solution ($CoSO_4 7H_2O$, Samchun Chemicals) were mixed with each other such that a molar ratio of nickel (Ni) and cobalt (Co) was 100:0, thereby preparing a first metal solution of 2M concentration. Further, a nickel sulfate aqueous solution ($MSO_4 6H_2O$, Samchun Chemicals), and a cobalt sulfate aqueous solution ($CoSO_4 7H_2O$, Samchun Chemicals) were mixed with each other such that a molar ratio of nickel (Ni) and cobalt (Co) was 80:20, thereby preparing a second metal solution of 2M concentration. The produced first metal solution was continuously added to the reactor at 0.561 liter/hour, 16M concentration of ammonia solution ($NH_4OH$, JUNSEI) was continuously added thereto at 0.08 liter/hour, and 4M concentration of sodium hydroxide solution (NaOH, Samchun Chemicals) was continuously added to the reactor at 0.60 liters/hour, for 14 hours. Thus, a first concentration maintaining portion was prepared. Thereafter, the second metal solution was added to a first metal solution bath at 0.561 liters/hour. In this connection, while a concentration of the metal solution fed into the reactor was constantly changed, the metal solution was continuously input the reactor for 10 hours such that a second concentration-gradient portion was produced on an outside of the first concentration maintaining portion. Thereafter, the input of the second metal solution into the first metal solution was terminated. Only the first metal solution having the changed concentration was put into the reactor at 0.561 liters/hour to produce a third concentration maintaining portion on an outside of the second concentration-gradient portion. The co-precipitation reaction was performed while maintaining the pH in the reactor in a range of 10 to 12 to produce a concentration-gradient metal composite hydroxide having an average composition of $Ni_{0.90}Co_{0.10}(OH)_2$.

The produced $Ni_{0.90}Co_{0.10}(OH)_2$ concentration-gradient metal composite hydroxide was filtered, and was washed several times with distilled water, and then was dried in a vacuum dryer at 110° C for 12 hours to produce powders. Borate ($B_2O_3$) was crushed to particles using a ball mill so that an average particle size thereof was 50 $\mu$m. Then, the $Ni_{0.90}Co_{0.10}(OH)_2$ concentration-gradient metal composite hydroxide produced in the powder form, aluminum hydroxide ($Al(OH)_3$), the borate particles ($B_2O_3$), and lithium hydroxide (LiOH) were mixed with each other at a molar ratio of 0.975:0.015:0.005:1.01 to prepare a mixture. Then, the mixture was heated at a temperature increase rate of 2°C/min, and was maintained at 450° C for 5 hours. In this way, preliminary sintering or pre-sintering was performed. Subsequently, the pre-sintered mixture was sintered at 700°C for 10 hours to produce positive-electrode active material powders (gradient NCA88.5-B 1) doped with boron (B) at 1 mol%. A content of each of elements of the produced positive-electrode active material powders was identified using ICP-OES (OPTIMA 8300, Perkin Elmer). Table 6 shows a B doping amount of the doping element, and a molar ratio of metal (nickel (Ni), and cobalt (Co)) to ammonia, and a sintering temperature in the process of producing the metal composite hydroxide.

Comparative Example 11 (NCA88.5)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, a nickel sulfate aqueous solution ($NiSO_4 6H_2O$, Samchun Chemicals), and a cobalt sulfate aqueous solution ($CoSO_4 7H_2O$, Samchun Chemicals) were mixed with each other such that a molar ratio of nickel (Ni) and cobalt (Co) was 90:10, thereby preparing a metal solution of 2M concentration. The produced metal solution was continuously added to the reactor at 0.561 liter/hour, 16M concentration of ammonia solution ($NH_4OH$, JUNSEI) was continuously added thereto at 0.08 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni_{0.90}Co_{0.10}(OH)_2$ metal composite hydroxide.

Then, positive-electrode active material powders (NCA88.5) not doped with boron (B) were produced in the same manner as that in Present Example 29 except that the $Ni_{0.90}Co_{0.10}(OH)_2$ metal composite hydroxide produced in the powder form, aluminum hydroxide ($Al(OH_3)$), and lithium hydroxide (LiOH) were mixed with each other at a molar ratio of 0.985:0.015:1.01. A content of each of elements of the produced positive-electrode active material powders was identified using ICP-OES (OPTIMA 8300, Perkin Elmer) and is shown in Table 6.

Comparative Example 12 (gradient NCA88.5)

Positive-electrode active material powders (gradient NCM89) not doped with boron (B) were produced in the same manner as that in Present Example 29 except that the $Ni_{0.90}Co_{0.10}(OH)_2$ concentration-gradient metal composite hydroxide produced in the powder form, aluminum hydroxide ($Al(OH)_3$), and lithium hydroxide (LiOH) were mixed with each other at a molar ratio of 0.985:0.015:1.01, and the sintering temperature was set to 730°C. A content of each of elements of the produced positive-electrode active material powders was identified using ICP-OES (OPTIMA 8300, Perkin Elmer) and is shown in Table 6.

[Table 6]

| Examples | Chemical Formula of Positive-electrode active material powder | Chemical composition analyzed via ICP-OES | B doping [mol%] | Molar ratio of ammonia to metal | Sintering temperature [°C] |
|---|---|---|---|---|---|
| Comparative Example 10 | $Li_{1.01}Ni_{0.90}Co_{0.08}Mn_{0.02}O_2$ | $Ni_{0.90}Co_{0.08}Mn_{0.02}$ | 0 | 1.2 | 720 |
| Present Example 28 | $Li_{1.01}B_{0.01}Ni_{0.90}Co_{0.08}Mn_{0.02}O_2$ | $Ni_{0.891}Co_{0.079}Mn_{0.021}B_{0.09}$ | 1.0 | 1.2 | 720 |
| Comparative Example 11 | $Li_{1.01}Ni_{0.885}Co_{0.10}Al_{0.015}O_2$ | $Ni_{0.885}Co_{0.10}Al_{0.015}$ | 0 | 1.2 | 730 |
| Comparative Example 12 | $Li_{1.01}Ni_{0.885}Co_{0.10}Al_{0.015}O_2$ | $Ni_{0.885}Co_{0.10}Al_{0.015}$ | 0 | 1.2 | 700 |
| Present Example 29 | $Li_{1.01}B_{0.01}Ni_{0.885}Co_{0.10}Al_{0.015}O_2$ | $Ni_{0.876}Co_{0.10}Al_{0.014}B_{0.01}$ | 1.0 | 1.2 | 700 |

(7) Production of co-doping type positive-electrode active material

Present Example 30 (NCO96-B0.5,Ta0.5)

10 liters of distilled water was put into a co-precipitation reactor (capacity 40L, output power of rotation motor being 750W or greater), and then $N_2$ gas was supplied to the reactor at a rate of 6 liters/minute. Stirring was executed at 350 rpm while maintaining the temperature of the reactor at 45°C. Then, a nickel sulfate aqueous solution ($N_1SO_46H_2O$, Samchun Chemicals) and a cobalt sulfate aqueous solution ($CoSO_47H_2O$, Samchun Chemicals) were mixed with each other such that a molar ratio of nickel (Ni) and cobalt (Co) was 96:4, thereby producing a metal solution of 2M concentration. The produced metal solution was continuously added to the reactor at 0.561 liter/hour, 16M concentration of ammonia solution ($NH_4OH$, JUNSEI) was continuously added thereto at 0.11 liter/hour, and 4M concentration of sodium hydroxide solution (NaOH, Samchun Chemicals) was continuously added to the reactor at 0.60 liters/hour, for 24 hours. While maintaining pH in the reactor in a range of 10 to 12, co-precipitation reaction was performed to produce $Ni_{0.96}Co_{0.04}(OH)_2$ metal composite hydroxide.

The produced $Ni_{0.96}Co_{0.04}(OH)_2$ metal composite hydroxide was filtered, and was washed several times with distilled water, and then was dried in a vacuum dryer at 110° C for 12 hours to produce powders. Borate ($B_2O_3$) was crushed to particles using a ball mill so that an average particle size thereof was 50 $\mu$m. Then, the $Ni_{0.96}Co_{0.04}(OH)_2$ metal composite hydroxide produced in the powder form, tantalum pentoxide ($Ta_2O_5$), the borate particles ($B_2O_3$), and lithium hydroxide (LiOH) were mixed with each other at a molar ratio of 0.99:0.0025:0.0025:1.01 to prepare a mixture. Then, the mixture was heated at a temperature increase rate of 2°C/min, and was maintained at 450° C for 5 hours. In this way, preliminary sintering or pre-sintering was performed. Subsequently, the pre-sintered mixture was sintered at 730°C for 10 hours to produce positive-electrode active material powders (NCO96-B0.5, Ta0.5) doped with tantalum (Ta) at 0.5 mol% and with boron (B) at 0.5 mol%. A content of each of elements of the produced positive-electrode active material powders was identified using ICP-OES (OPTIMA 8300, Perkin Elmer). Table 7 shows a B doping amount of the doping element, and a molar ratio of metal (nickel (Ni), and cobalt (Co)) to ammonia, and a sintering temperature in the process of producing the metal composite hydroxide.

Present Example 31 (NCO96-B0.5,Mo0.5)

Positive-electrode active material powders (NCO96-B0.5, Mo0.5) doped with molybdenum (Mo) at 0.5 mol% and boron (B) at 0.5 mol% were produced in the same manner as that in Present Example 30 except that the $Ni_{0.96}Co_{0.04}(OH)_2$ metal composite hydroxide produced in the powder form, molybdenum trioxide ($MoO_3$), the borate particles ($B_2O_3$), and lithium hydroxide (LiOH) were mixed with each other at a molar ratio of 0.99:0.005:0.0025:1.01. A content of each of elements of the produced positive-electrode active material powders was identified using ICP-OES (OPTIMA 8300, Perkin Elmer) and is shown in Table 7.

Present Example 32 (NCO96-B0.5,Nb0.5)

Positive-electrode active material powders (NCO96-B0.5, Nb0.5) doped with niobium (Nb) at 0.5 mol% and boron (B) at 0.5 mol% were produced in the same manner as that in Present Example 30 except that the $Ni_{0.96}Co_{0.04}(OH)_2$ metal composite hydroxide produced in the powder form, niobium pentoxide ($Nb_2O_5$), the borate particles ($B_2O_3$), and lithium hydroxide (LiOH) were mixed with each other at a molar ratio of 0.99:0.0025:0.0025:1.01. A content of each of elements of the produced positive-electrode active material powders was identified using ICP-OES (OPTIMA 8300, Perkin Elmer) and is shown in Table 7.

Present Example 33 (NCO96-B0.5,Sb0.5)

Positive-electrode active material powders (NCO96-B0.5, Sb0.5) doped with antimony (Sb) at 0.5 mol% and boron (B) at 0.5 mol% were produced in the same manner as that in Present Example 30 except that the $Ni_{0.96}Co_{0.04}(OH)_2$ metal composite hydroxide produced in the powder form, antimony trioxide ($Sb_2O_3$), the borate particles ($B_2O_3$), and lithium hydroxide (LiOH) were mixed with each other at a molar ratio of 0.99:0.0025:0.0025:1.01. A content of each of elements of the produced positive-electrode active material powders was identified using ICP-OES (OPTIMA 8300, Perkin Elmer) and is shown in Table 7.

Comparative Example 13 (NCO96)

Positive-electrode active material powders (NCO96) were produced in the same manner as that in Present Example 31 except that the $Ni_{0.96}Co_{0.04}(OH)_2$ metal composite hydroxide produced in the powder form, and lithium hydroxide (LiOH) were mixed with each other at a molar ratio of 1:1.01. A content of each of elements of the produced positive-electrode active material powders was identified using ICP-OES (OPTIMA 8300, Perkin Elmer) and is shown in Table 7.

2. Fabrication of half-cells and full-cells using Present Examples and Comparative Examples

Each of half-cells and full-cells was fabricated using each of Present Example 1 to Present Example 33 and Comparative Example 1 to Comparative Example 13.

To fabricate each of the half-cells and the full-cells, the positive-electrode active material in the powder form (1 g) produced according to each of Present Example 1 to Present Example 33 and Comparative Example 1 to Comparative Example 13, poly(vinylidene fluoride) and carbon black were added in 0.4 g of N-methyl pyrrolidone in a weight ratio of 90:4.5:5.5, and were uniformly mixed with each other to produce a positive-electrode slurry. The produced positive-electrode slurry was coated on an aluminum foil, and the coating was subjected to roll press, and then to vacuum drying to produce a positive-electrode.

When producing a half cell using the produced positive electrode active material, the produced positive electrode as a slurry was coated on the aluminum foil so that a loading level of the positive electrode active material was 5 mg/cm$^2$. Thus, the positive electrode was produced. In this connection, the loading level of the positive electrode active material being 5 mg/cm$^2$ may mean that when the aluminum foil coated with the electrode active material is sampled into a square of 1 cm$^2$, a weight of only the positive electrode active material in the components of the positive electrode is 5 mg). Then, electrolyte was produced as follows: ethylene carbonate, and ethyl methyl carbonate (EC:EMC = 3:7 v/v) were used as a solvent; vinylene carbonate (VC) as an additive of 2wt% and lithium salt 1.2 mol/L LiPF$_6$ were uniformly dissolved therein. A 2032-coin-type half-cell (hereinafter, coin cell) using Li$_o$ as a negative electrode was produced.

When producing a full cell using the produced positive electrode active material, the produced positive electrode as a slurry was coated on the aluminum foil so that a loading level of the positive electrode active material was 8.5 mg/cm$^2$. Thus, the positive electrode was produced. Graphite as a slurry was coated on the copper foil so that the loading level thereof was 6.5 mg/cm$^2$, followed by roll pressing and then vacuum drying to produce a negative electrode. Then, electrolyte was produced as follows: ethylene carbonate, and ethyl methyl carbonate (EC:EMC = 3:7 v/v) were used as a solvent; vinylene carbonate (VC) as an additive of 2wt% and lithium salt 1.2 mol/L LiPF$_6$ were uniformly dissolved therein. In a pouch-type battery case, the positive electrode, a separator (Celgard, model 2320) and the negative electrode were stacked. The produced electrolyte was injected thereto. The case was sealed to produce a pouch-type full cell.

3. Evaluation of Present Examples, Comparative Examples and Fabrication Examples

(1) Identification of capacity and cycle characteristics using half-cell

The produced half-cell was charged to 4.3V and discharged to 2.7V at a constant current of 0.5C (100 mA/g) at 30°C, and 100 cycles were performed under the same condition as a charge/discharge test (hereinafter, 2.7V-4.3V). Thus, a recovery capacity was identified and is shown in Table 7.

[Table 7]

| Examples | Type of positive-electrode active material | Chemical Formula of Positive-electrode active material powder | Doping element | Doping [mol%] | Refined Structure | 0.1C discharge capacity [mAh g-1] | Initial Coulombic Efficiency [%] | 0.5 C discharge capacity [mAhg-1] | 0.5C discharge capacity after 100 cycles | Capacity retention after 100 cycles [%] |
|---|---|---|---|---|---|---|---|---|---|---|
| Comparative Example 1 | NCM-based | $Li_{1.01}Ni_{0.65}Co_{0.13}Mn_{0.22}O_2$ | B | 0 | X | 198.6 | 95.2 | 188.8 | 180.9 | 95.8 |
| Present Example 1 | NCM-based | $Li_{1.01}B_{0.01}Ni_{0.65}Co_{0.13}Mn_{0.22}O_2$ | B | 1.0 | O | 200.7 | 95.5 | 190.8 | 185.8 | 97.4 |
| Present Example 2 | NCM-based | $Li_{1.01}B_{0.01}Ni_{0.65}Co_{0.13}Mn_{0.22}O_2$ | B | 1.0 | X | 183.2 | 93.5 | 173.4 | 156.1 | 90 |
| Comparative Example 2 | NCM-based | $Li_{1.01}Ni_{0.90}Co_{0.05}Mn_{0.05}O_2$ | B | 0 | X | 229.3 | 95.6 | 215.2 | 179.5 | 83.4 |
| Present Example 3 | NCM-based | $Li_{1.01}B_{0.004}Ni_{0.90}Co_{0.05}Mn_{0.05}O_2$ | B | 0.4 | O | 232.6 | 94.6 | 214.9 | 191.7 | 89.2 |
| Present Example 4 | NCM-based | $Li_{1.01}B_{0.01}Ni_{0.90}Co_{0.05}Mn_{0.05}O_2$ | B | 1.0 | O | 230.7 | 94 | 209.4 | 191.4 | 91.4 |
| Present Example 5 | NCM-based | $Li_{1.01}B_{0.01}Ni_{0.90}Co_{0.05}Mn_{0.05}O_2$ | B | 1.0 | O | 229.3 | 95.6 | 215.2 | 190.5 | 88.5 |
| Present Example 6 | NCM-based | $Li_{1.01}B_{0.01}Ni_{0.90}Co_{0.05}Mn_{0.05}O_2$ | B | 1.0 | O | 225.4 | 95 | 208.9 | 188.4 | 90.2 |
| Present Example 7 | NCM-based | $Li_{1.01}B_{0.01}Ni_{0.90}Co_{0.05}Mn_{0.05}O_2$ | B | 1.0 | X | 214.1 | 93.7 | 186.5 | 159.8 | 85.7 |
| Comparative Example 3 | NCM-based | $Li_{1.01}Ni_{0.92}Co_{0.04}Mn_{0.04}O_2$ | B | 0 | X | 233.7 | 94.9 | 217.4 | 186.7 | 85.9 |
| Present Example 8 | NCM-based | $Li_{1.01}B_{0.01}Ni_{0.92}Co_{0.04}Mn_{0.04}O_2$ | B | 1.0 | O | 237.4 | 95.5 | 218.9 | 199.0 | 90.9 |
| Comparative Example 4 | LNO-based | $Li_{1.01}NiO_2$ | B | 0 | X | 250.0 | 95.8 | 231.7 | 166.8 | 72.0 |

EP 3 989 316 A1

31

| Examples | Type of positive-electrode active material | Chemical Formula of Positive-electrode active material powder | Doping element | Doping [mol%] | Refined Structure | 0.1C discharge capacity [mAh g-1] | Initial Coulombic Efficiency [%] | 0.5 C discharge capacity [mAhg-1] | 0.5C discharge capacity after 100 cycles | Capacity retention after 100 cycles [%] |
|---|---|---|---|---|---|---|---|---|---|---|
| Present Example 9 | LNO-based | $Li_{1.01}B_{0.01}NiO_2$ | B | 1.0 | O | 247.3 | 97 | 235.5 | 184.6 | 78.4 |
| Present Example 10 | LNO-based | $Li_{1.01}B_{0.01}NiO_2$ | B | 1.0 | O | 248.2 | 96.8 | 230.2 | 179.1 | 77.8 |
| Present Example 11 | LNO-based | $Li_{1.01}B_{0.01}NiO_2$ | B | 1.0 | X | 247.5 | 96.5 | 231.5 | 169.0 | 73 |
| Present Example 12 | LNO-based | $Li_{1.01}B_{0.01}NiO_2$ | B | 1.0 | X | 244.7 | 96.4 | 228.4 | 141.8 | 62.1 |
| Comparative Example 5 | NCO-based | $Li_{1.01}Ni_{0.9}Co_{0.10}O_2$ | B | 0 | X | 225.3 | 95.1 | 209.8 | 141.0 | 67.2 |
| Present Example 13 | NCO-based | $Li_{1.01}B_{0.0005}Ni_{0.9}Co_{0.10}O_2$ | B | 0.05 | X | 224.8 | 94.1 | 209.5 | 161.9 | 77.3 |
| Present Example 14 | NCO-based | $Li_{1.01}B_{0.001}Ni_{0.9}Co_{0.10}O_2$ | B | 0.1 | O | 224.3 | 93.5 | 208 | 169.1 | 81.3 |
| Present Example 15 | NCO-based | $Li_{1.01}B_{0.005}Ni_{0.9}Co_{0.10}O_2$ | B | 0.5 | O | 234.2 | 96.1 | 218.2 | 181.8 | 83.3 |
| Present Example 16 | NCO-based | $Li_{1.01}B_{0.01}Ni_{0.9}Co_{0.10}O_2$ | B | 1 | O | 236.2 | 96.7 | 222.8 | 198.1 | 88.9 |
| Present Example 17 | NCO-based | $Li_{1.01}B_{0.015}Ni_{0.9}Co_{0.10}O_2$ | B | 1.5 | O | 232.7 | 95.6 | 221.7 | 202.2 | 91.2 |
| Present Example 18 | NCO-based | $Li_{1.01}B_{0.02}Ni_{0.9}Co_{0.10}O_2$ | B | 2 | O | 232.3 | 96.4 | 220 | 201.5 | 91.6 |
| Present Example 19 | NCO-based | $Li_{1.01}B_{0.03}Ni_{0.9}Co_{0.10}O_2$ | B | 3 | O | 226.7 | 94.2 | 216.1 | 197.3 | 91.3 |
| Present Example 20 | NCO-based | $Li_{1.01}B_{0.04}Ni_{0.9}Co_{0.10}O_2$ | B | 4 | O | 229.1 | 95.6 | 213.2 | 184.6 | 86.6 |

EP 3 989 316 A1

32

| Examples | Type of positive-electrode active material | Chemical Formula of Positive-electrode active material powder | Doping element | Doping [mol%] | Refined Structure | 0.1C discharge capacity [mAh g-1] | Initial Coulombic Efficiency [%] | 0.5 C discharge capacity [mAhg-1] | 0.5C discharge capacity after 100 cycles | Capacity retention after 100 cycles [%] |
|---|---|---|---|---|---|---|---|---|---|---|
| Present Example 21 | NCO-based | $Li_{1.01}B_{0.05}Ni_{0.9}Co_{0.10}O_2$ | B | 5 | O | 218.8 | 94.5 | 198.2 | 170.3 | 85.9 |
| Comparative Example 6 | NCO-based | $Li_{1.01}B_{0.07}Ni_{0.9}Co_{0.10}O_2$ | B | 7 | O | 186.7 | 91.2 | 165.7 | 142.2 | 85.8 |
| Present Example 22 | NCO-based | $Li_{1.01}B_{0.005}Ni_{0.895}Co_{0.10}Mo_{0.005}O_2$ | B/ Mo | 0.5/0.5 | O | 232.2 | 94.9 | 217.2 | 205.7 | 94.7 |
| Comparative Example 7 | NCA-based | $Li_{1.01}Ni_{0.885}Co_{0.10}Al_{0.015}O_2$ | B | 0 | X | 225.1 | 95.1 | 210.6 | 176.3 | 83.7 |
| Present Example 23 | NCA-based | $Li_{1.01}B_{0.005}Ni_{0.885}Co_{0.10}Al_{0.015}O_2$ | B | 0.5 | O | 224 | 94.2 | 208 | 191.8 | 92.2 |
| Present Example 24 | NCA-based | $Li_{1.01}B_{0.01}Ni_{0.885}Co_{0.10}Al_{0.015}O_2$ | B | 1 | O | 229.8 | 95.2 | 207.6 | 199.7 | 96.2 |
| Comparative Example 8 | NCA-based | $Li_{1.01}Ni_{0.80}Co_{0.16}Al_{0.04}O_2$ | B | 0 | X | 203.2 | 93.2 | 190.7 | 174.3 | 91.4 |
| Present Example 25 | NCA-based | $Li_{1.01}B_{0.01}Ni_{0.80}Co_{0.16}Al_{0.04}O_2$ | B | 1 | O | 204.3 | 94.8 | 191.6 | 177.2 | 92.5 |
| Comparative Example 9 | NMO-based | $Li_{1.01}Ni_{0.9}Mn_{0.10}O_2$ | B | 0 | O | 226.6 | 93.9 | 212.4 | 185.6 | 87.4 |
| Present Example 26 | NMO-based | $Li_{1.01}B_{0.005}Ni_{0.9}Mn_{0.10}O_2$ | B | 0.5 | O | 228.5 | 96.1 | 207.7 | 191.3 | 92.1 |
| Present Example 27 | NMO-based | $Li_{1.01}B_{0.01}Ni_{0.9}Mn_{0.10}O_2$ | B | 1.0 | O | 228.4 | 96 | 207.2 | 192.9 | 93.1 |
| Comparative Example 10 | gradient NCM-based | $Li_{1.01}Ni_{0.90}Co_{0.08}Mn_{0.02}O_2$ | B | 0 | X | 233.6 | 96.7 | 22.7 | 20.7 | 91.3 |
| Present Example 28 | NCM-based | $Li_{1.01}B_{0.01}Ni_{0.90}Co_{0.08}Mn_{0.02}O_2$ | B | 1.0 | O | 232.8 | 96.1 | 219.9 | 208.5 | 94.8 |

EP 3 989 316 A1

33

(continued)

| Examples | Type of positive-electrode active material | Chemical Formula of Positive-electrode active material powder | Doping element | Doping [mol%] | Refined Structure | 0.1C discharge capacity [mAh g-1] | Initial Coulombic Efficiency [%] | 0.5 C discharge capacity [mAhg-1] | 0.5C discharge capacity after 100 cycles | Capacity retention after 100 cycles [%] |
|---|---|---|---|---|---|---|---|---|---|---|
| Comparative Example 11 | gradient NCA-based | $Li_{1.01}Ni_{0.885}Co_{0.10}Al_{0.015}O_2$ | B | 0 | X | 222.4 | 94.5 | 206.1 | 191.1 | 92.7 |
| Comparative Example 12 | NCM-based | $Li_{1.01}Ni_{0.885}Co_{0.10}Al_{0.015}O_2$ | B | 0 | X | 221.3 | 94.3 | 209.4 | 190.8 | 91.1 |
| Present Example 29 | gradient NCM-based | $Li_{1.01}B_{0.01}Ni_{0.885}Co_{0.10}Al_{0.015}O_2$ | B | 1.0 | O | 228.1 | 96.1 | 216.9 | 204.3 | 94.2 |
| Comparative Example 13 | NCO - based | $Li_{1.01}Ni_{0.96}Co_{0.04}O_2$ | B | 0 | X | 237.2 | 95.1 | 216.0 | 169.3 | 78.4 |
| Present Example 30 | NCO - based | $Li_{1.01}B_{0.005}Ta_{0.005}Ni_{0.95}Co_{0.10}O_2$ | B/Ta | 0.5/0.5 | O | 239.4 | 94.4 | 216.2 | 193.3 | 89.4 |
| Present Example 31 | NCO - based | $Li_{1.01}B_{0.005}Nb_{0.005}Ni_{0.95}Co_{0.10}O_2$ | B/Nb | 0.5/0.5 | O | 242.8 | 95.5 | 230.5 | 201.0 | 87.2 |
| Present Example 32 | NCO - based | $Li_{1.01}B_{0.005}Mo_{0.005}Ni_{0.95}Co_{0.10}O_2$ | B/Mo | 0.5/0.5 | O | 242.2 | 94.9 | 224.8 | 199.4 | 88.7 |
| Present Example 33 | NCO - based | $Li_{1.01}B_{0.005}Sb_{0.005}Ni_{0.95}Co_{0.10}O_2$ | B/Sb | 0.5/0.5 | O | 239.4 | 95.1 | 219.4 | 201.0 | 91.6 |

(3) Identification of refined structures of metal composite oxide (precursor) and positive electrode active material using SEM

The refined structure of each of the positive electrode active material according to each of the Fabrication Examples and the metal composite oxide (precursor) before the preliminary sintering of the positive electrode active material was identified using SEM (Nova Nano SEM 450, FEI).

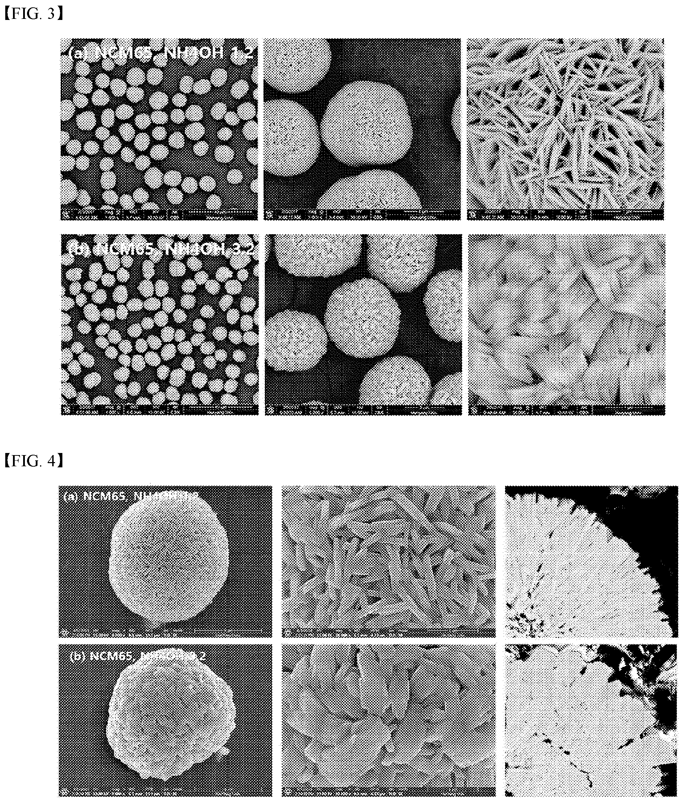

FIG. 3 is an SEM image of metal composite hydroxide according to each of Present Example 1 and Present Example 2, and FIG. 4 is an SEM image of a positive-electrode active material according to each of Present Example 1 and Present Example 2.

In FIG. 3 and FIG. 4, when comparing (a) Present Example 1 and (b) Present Example 2 as the NCM-based positive-electrode active materials with a Ni content of approximately 65 mol% with each other, it was identified that when the metal (nickel, cobalt, manganese) as the same content was used, and as the molar ratio of ammonia to metal increased from 1.2 to 3.2, the shape of primary particles in metal composite hydroxide before the preliminary sintering varied.

In FIG. 3, in the case of metal composite hydroxide, in Present Example 1, primary particles were separated from each other and had a thin flake shape, whereas in Present Example 2, a plurality of primary particles were combined with each other in an aggregated manner. Referring to FIG. 4, it was identified that in Present Example 1 and Present Example 2 as the positive-electrode active material obtained via sintering at high temperature with lithium hydroxide while doping the boron (B), each of the primary particles had have an approximate angle at a corner side in a top view of the primary particles. Further, in Present Example 1, primary particles were separated from each other, while in Present Example 2, the aggregated form of primary particles observed in the 1 composite hydroxide was observed in the positive-electrode active material after sintering.

In Table 7, when it is identified that the 0.1C discharge capacities of Present Example 1 and Present Example 2 are 200.7 mAh/g and 183.2 mAh/g, respectively, and the capacity retentions thereof are 97.4% and 90% after 100 cycles, respectively. It was identified that in the case of Present Example 2 in which the primary particles were present in an aggregated form, when the nickel (Ni) at the same content was used, and the boron (B) was doped thereto, and the content of the ammonia to the metal was high, the discharge capacity and the capacity retention were lower than those in Present Example 1.

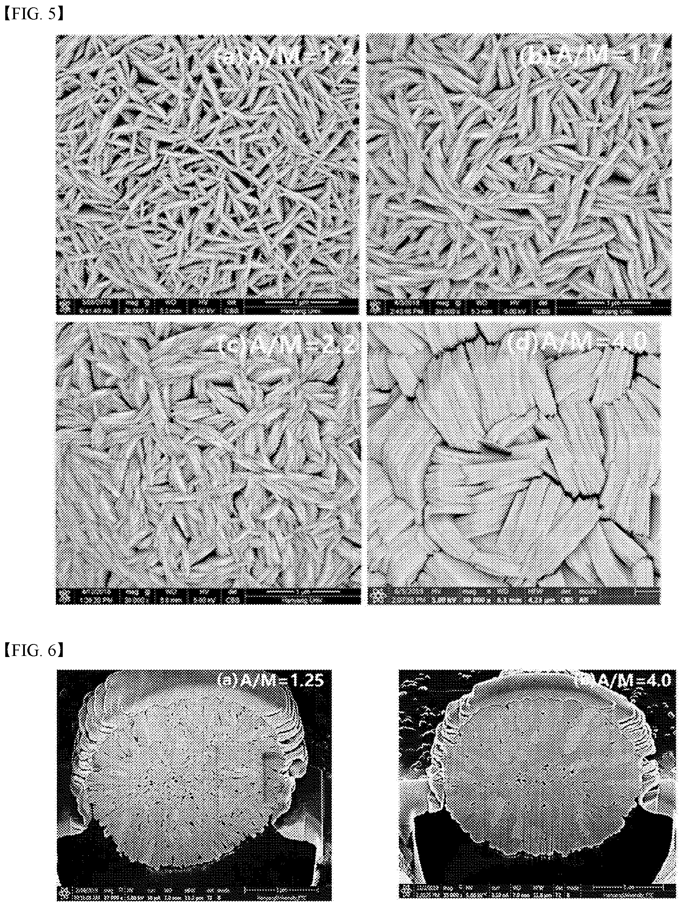

FIG. 5 is an SEM image of metal composite hydroxide according to each of Present Example 4 to Present Example 7, and FIG. 6 is an SEM image of a positive-electrode active material according to each of Present Example 4 and Present Example 7.

In FIG. 5, it was identified that when comparing (a) Present Example 4, (b) Present Example 5, (c) Present Example 6 and (d) Present Example 7 as the NCM-based positive-electrode active materials with a Ni content of approximately 90 mol% with each other, as the molar ratio (A/M) of ammonia to metal increased from 1.2 to 4, the primary particles were present in the aggregated form in the metal composite hydroxide and were relatively increased in size.

Referring to FIG. 6, it was identified that when (a) Present Example 4 and (b) Present Example 7 were compared with each other, even after the doping with boron (B) at 1 mol%, and then the sintering, the trend shown in metal composite hydroxide occurred in the same manner. Referring to Table 7, the 0.1C discharge capacities of Present Example 4, Present Example 5, Present Example 6 and Present Example 7 are 230.7 mAh/g, 229.3 mAh/g, 225.4 mAh/g, and 214.1 mAh/g, respectively. Capacity retentions after 100 cycles thereof are 91.4%, 88.5%, 90.2%, and 85.7%, respectively. In the case of 90 mol% NCM-based positive-electrode active material, 0.1C discharge capacity is slightly reduced and the capacity retention after 100 cycles is slightly decreased only when the molar ratio of ammonia to metal is 4. When the molar ratio of ammonia to metal is smaller than 4, for example, is smaller than or equal to 2.2, 0.1C discharge capacity and the capacity retention after 100 cycles are maintained at the same level.

When comparing Comparative Example 1 and Present Example 1 including 65 mol% nickel (Ni), and Comparative Example 2, and Present Example 4 including 90 mol% nickel (Ni) with each other in the case of producing the metal composite hydroxide from the NCM-based positive-electrode active material, it was identified that Comparative Example 2 and Present Example 4 which had a higher nickel content had relatively higher discharge capacity. This is summarized in Table 8 below. On the other hand, it was identified that the 100-cycles capacity retentions of Comparative Example 1 and Present Example 1 were relatively higher. That is, it was identified that when the content of nickel (Ni) increased in the NCM-based positive-electrode active material, the discharge capacity increased while the cycle characteristics were lowered.

When comparing Comparative Example 1 and Present Example 1 with each other, and comparing Comparative Example 2 and Present Example 4 with each other, it was identified that when boron (B) was doped at 1 ml%, the 100-cycle capacity retention was improved even though there was no significant difference in the discharge capacity. Further, even through the nickel content was 90 mol%, the 100-cycle capacity retention improvement was more prominent. In Present Example 1 and Present Example 4, the primary particles were clearly identified to have the refined structure that appeared in the positive-electrode active material after sintering. In Comparative Example 1 and Comparative Example 2, irregular mass appeared only as an agglomerated spherical particle, and the primary particles with the same refined structure as those observed in Present Example 1 and Present Example 4 was not clearly identified.

That is, it may be identified that the cycle characteristics of the NCM-based positive-electrode active material including nickel (Ni) are improved due to the doped boron (B). This effect increases as the content of nickel (Ni) increases. Further, it is considered that the refined structure of the positive-electrode active material is improved due to the doping of boron (B).

[Table 8]

| Examples | Type of positive-electrode active material | Doping element | Doping [mol%] | Refined Structure | Initial discharge capacity [mAh g-1] | Initial Coulombic Efficiency [%] | 0.5 C discharge capacity [mAh g-1] | Capacity retention after 100 cycles [%] |
|---|---|---|---|---|---|---|---|---|
| Comparative Example 1 | NCM-based | B | 0 | X | 198.6 | 95.2 | 188.8 | 95.8 |
| Present Example 1 | NCM-based | B | 1.0 | O | 200.7 | 95.5 | 190.8 | 97.4 |
| Comparative Example 2 | NCM-based | B | 0 | X | 229.3 | 95.6 | 215.2 | 83.4 |
| Present Example 4 | NCM-based | B | 1.0 | O | 230.7 | 94 | 209.4 | 91.4 |

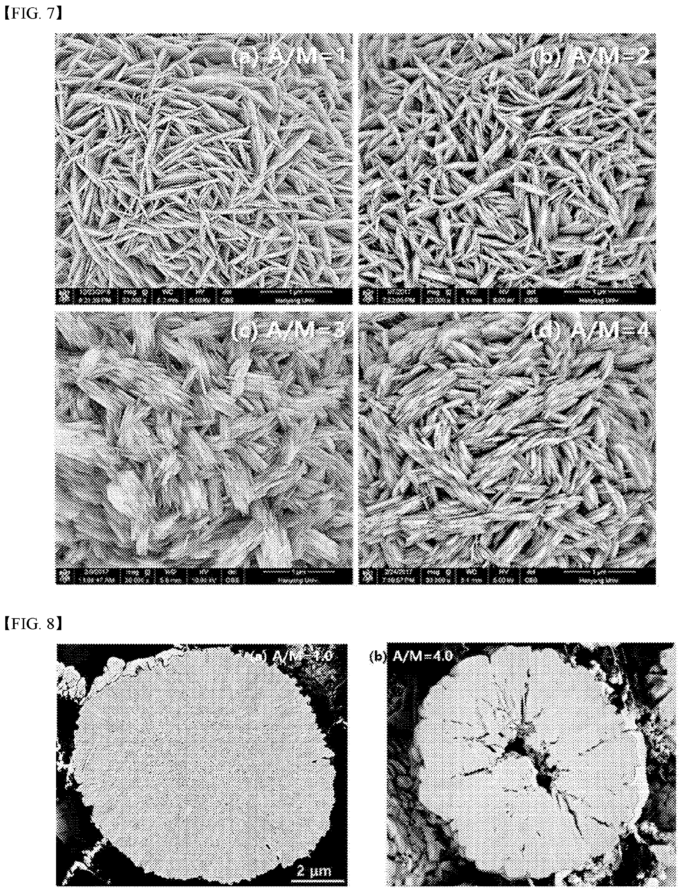

FIG. 7 is an SEM image of metal composite hydroxide according to each of Present Example 9 to Present Example 12, and FIG. 8 is an SEM image of a positive-electrode active material according to each of Present Example 9 and Present Example 12.

Referring to FIG. 7, it was identified that when the metal composite hydroxide is made of 100 mol% of Ni, the molar ratio of ammonia to metal was increased ((a) Present Example 9, (b) Present Example 10, (c) Present Example 11, (d) Present Example 12), the primary particles were agglomerated with each other and were shortened in size. On the other hand, it was identified that as shown in FIG. 8, (a) Present Example 9 maintained the thickness of the primary particle at a small size even after sintering, while (b) in the case of Present Example 12, the primary particles were melted after the sintering such that a plurality of primary particles were agglomerated with each other, and a microcrack was formed therein.

Referring to Table 7, it was identified that the 0.1C discharge capacities of Present Example 9 to Present Example 12 were approximately 247.3 mAh/g, 248.2 mAh/g, 247.5 mAh/g, and 244.7 mAh/g, respectively. In this connection, Present Example 12 in which the molar ratio of ammonia to metal was 4 was relatively inferior in the 100-cycle capacity retention.

That is, it was identified that as the ratio of ammonia to metal in the LNO-based positive-electrode active material increases, the primary particles of metal composite hydroxide tend to agglomerate with each other. In the positive-electrode active material after sintering, when the molar ratio of ammonia to metal was 4, the primary particles were melted to increase the thickness of the primary particle, such that the capacity retention characteristics after 100 cycles deteriorated. In the case of Present Example 12, microcracks occurred in the center of the secondary particle during the sintering process, and thus the cycle characteristics were deteriorated.

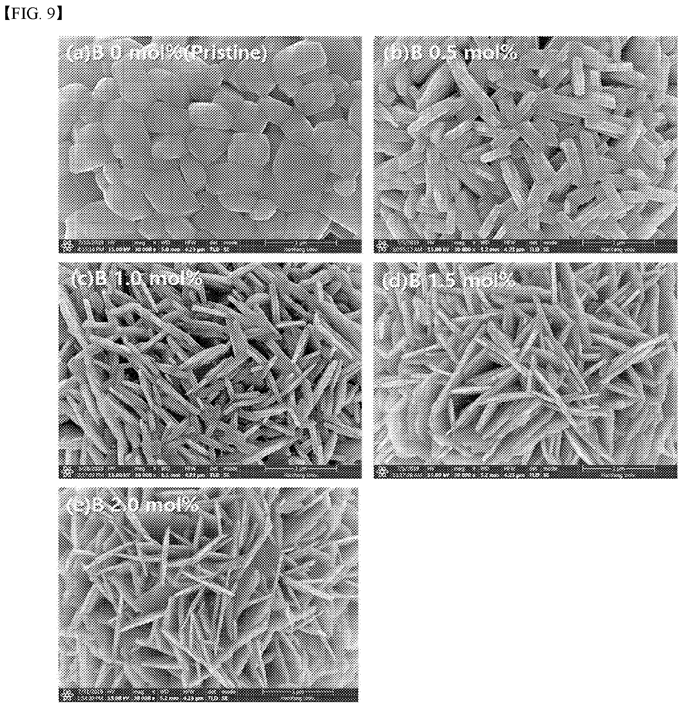

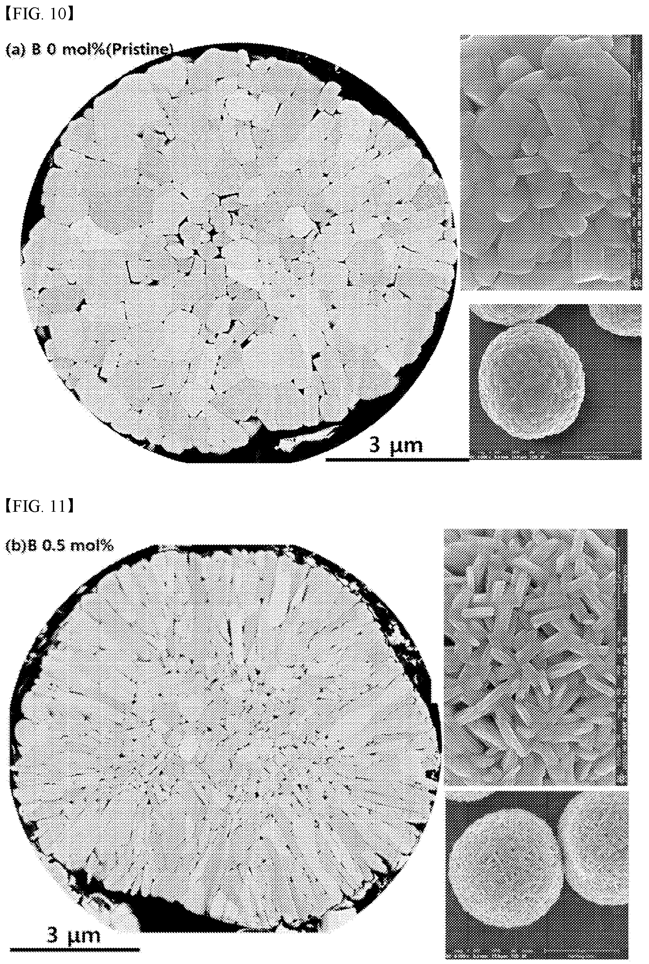

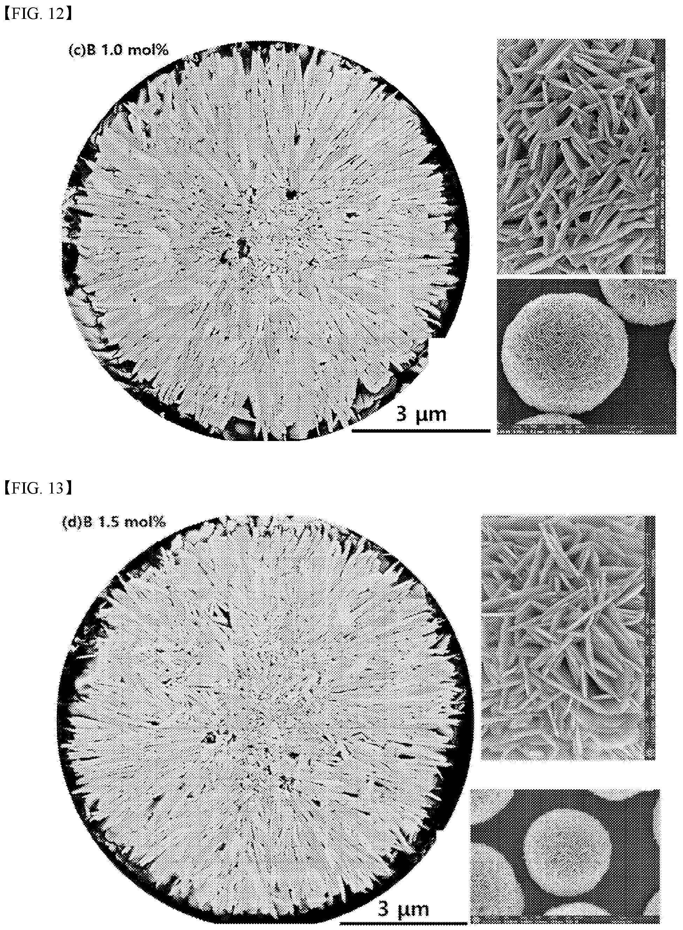

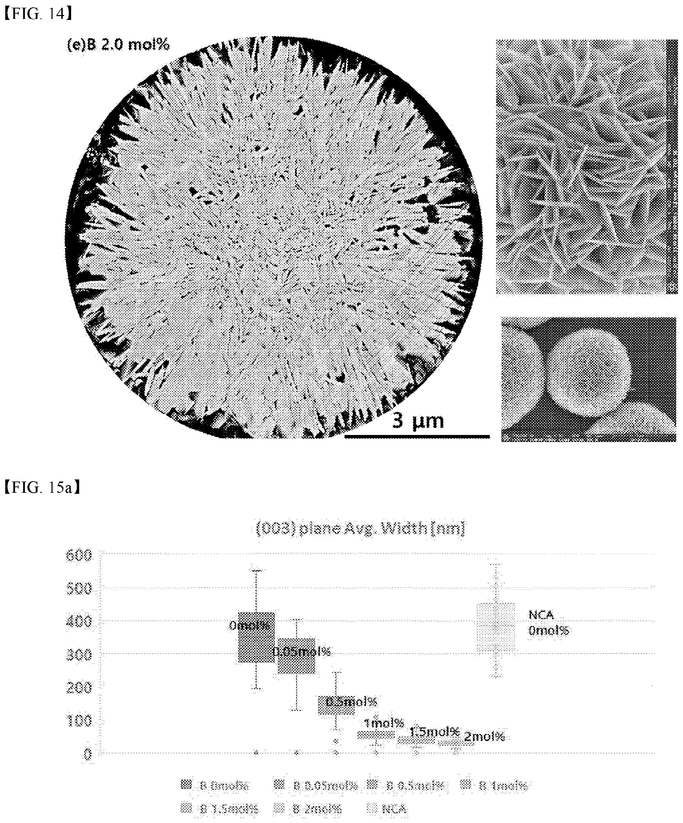

FIG. 9 is an SEM image of measuring the thickness of the primary particle disposed in the surface of the secondary particle based on the boron (B) doping amount in the NCO-based positive-electrode active material using the metal composite hydroxide containing 90 mol% Ni. FIG. 10 is an SEM image of a positive-electrode active material that is not doped with boron (B) in FIG. 9, and FIG. 11 is an SEM image of a positive-electrode active material doped with 0.5 mol% boron (B) in FIG. 9. FIG. 12 is an SEM image of a positive-electrode active material doped with 1 mol% boron (B) in FIG. 9, and FIG. 13 is an SEM image of a positive-electrode active material doped with 1.5 mol% boron (B) in FIG. 9., FIG. 14 is an SEM image of the positive-electrode active material doped with boron (B) at 2 mol% in FIG. 9.

Table 9 below indicates the measurement of the thickness (the third length, (003) plane Avg. Width [nm]) of the primary particle disposed in the surface of the secondary particle based on the boron (B) doping amount in the NCO-based positive-electrode active material using the metal composite hydroxide containing Ni at 90 mol% as shown in FIG. 9, a value calculated by applying Scherrer's equation using (003) reflection and based on the XRD data, presence or absence of the refined structure, and a I(003)/I(104) ratio.

[Table 9]

| Examples | Type of positive-electrode active material | B doping [mol%] | Sintering temperature [°C] | (003)plane Avg. Width [nm] | (003) plane Crystallite size [nm] | Refined Structure | I(003)/I(104) ratio |
|---|---|---|---|---|---|---|---|
| Comparative Example 5 | NCO-based | 0.0 | 730 | 351 | 294 | X | 2.19 |
| Present Example 13 | NCO-based | 0.05 | 730 | 288 | 221.4 | X | 2.15 |
| Present Example 15 | NCO-based | 0.5 | 730 | 147 | 198 | O | 2.01 |
| Present Example 16 | NCO-based | 1 | 730 | 59.8 | 138 | O | 1.99 |
| Present Example 17 | NCO-based | 1.5 | 730 | 41.9 | 115.0 | O | 1.85 |
| Present Example 18 | NCO-based | 2.0 | 730 | 29.8 | 103.6 | O | 1.8 |
| Comparative Example 7 | NCA-based | 0.0 | 730 | 374 | 271.0 | O | 2.33 |

Referring to FIG. 9 to FIG. 14 together with Table 9, it was identified that in the NCO-based positive-electrode active material using a metal composite hydroxide containing 90 mol% Ni, as the boron (B) doping amount increased, the thickness decreased gradually. In Table 9, the third length as the spacing between the pair of (003) planes of the primary particle disposed in the outermost face of the second particle among the primary particles constituting the secondary particle is measured and is shown as the value (003) plane Avg. Width [nm].

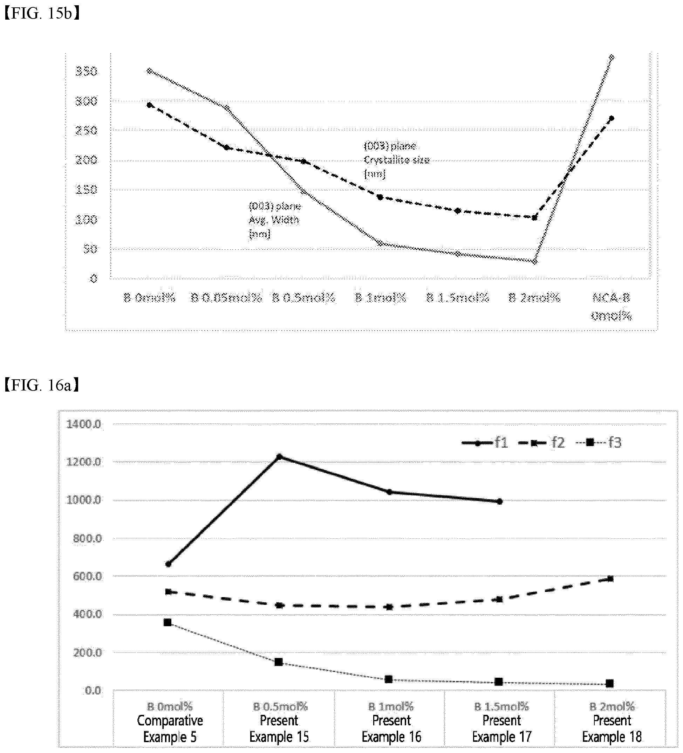

FIG. 15a is a graph showing a result of measuring a spacing between a pair of (003) planes as a third length of a primary particle disposed in a surface of a secondary particle among primary particles using a SEM image, in an NCO-based positive-electrode active material using metal composite hydroxide containing 90 mol% Ni. Table 10 shows the average value, the standard deviation, the maximum value, and the minimum value of the values in FIG. 15a. FIG. 15b is a graph of a length of the (003) plane based on a boron (B) doping amount. In the following, the unit of the length of each of the primary particles of the positive-electrode active material is nm.

[Table 10]

| Examples | Type of positive-electrode active material | B doping [mol%] | Average value | Maximum value | Minimum value | Standard deviation |
|---|---|---|---|---|---|---|
| Comparative Example 5 | NCO-based | B 0mol% | 351.3 | 551.5 | 194.0 | 98.1 |
| Present Example 13 | NCO-based | B 0.05mol% | 288.1 | 403.2 | 129.6 | 59.4 |
| Present Example 15 | NCO-based | B 0.5mol% | 145.8 | 246.0 | 35.3 | 39.2 |
| Present Example 16 | NCO-based | B 1mol% | 55.5 | 111.1 | 23.7 | 18.2 |
| Present Example 17 | NCO-based | B 1.5mol% | 40.6 | 91.3 | 17.4 | 14.0 |
| Present Example 18 | NCO-based | B 2mol% | 30.0 | 63.6 | 3.5 | 9.7 |
| Comparative Example 7 | NCA-based | B 0mol% | 383.6 | 569.6 | 231.3 | 90.9 |

Referring to FIG. 15a together with Table 10, it was identified that as the doping content of the boron (B) increased in the NCO-based positive-electrode active material using a metal composite hydroxide containing 90 mol% Ni, the average value of the third length decreased, and at the same time, the standard deviation value of the third length decreased. That is, it was identified that the third length of the primary particle disposed in the surface of the secondary particle among the primary particles acted as a thickness gradually decreased and within a controlled range at the same time, based on the boron (B) doping amount. That is, it may be identified that the doping amount of the boron (B) controls the third length to be reduced into a predetermined range.

Referring to Table 10, it was identified that the NCA-based Comparative Example 7 in which boron (B) was not doped exhibited similar mean and standard deviation to those in the NCO-based Comparative Example 5. That is, it was identified that regardless of the type of positive-electrode active material, the average value and standard deviation of the third length of each of the primary particles disposed in the surface of the secondary particle among the primary particles were controlled based on the content of the doped boron (B).

Further, in Table 10, a crystal size of the (003) plane ((003) plane Crystallite size [nm]) is described. This is a value calculated by applying Scherrer's equation using (003) reflection and based on XRD data. In FIG. 15b, the value measured using the SEM image ((003) plane Avg. Width [nm]) and the value calculated using the Scherrer equation ((003) plane Crystallite size [nm]) are compared with each other and the comparing result is shown as a graph.

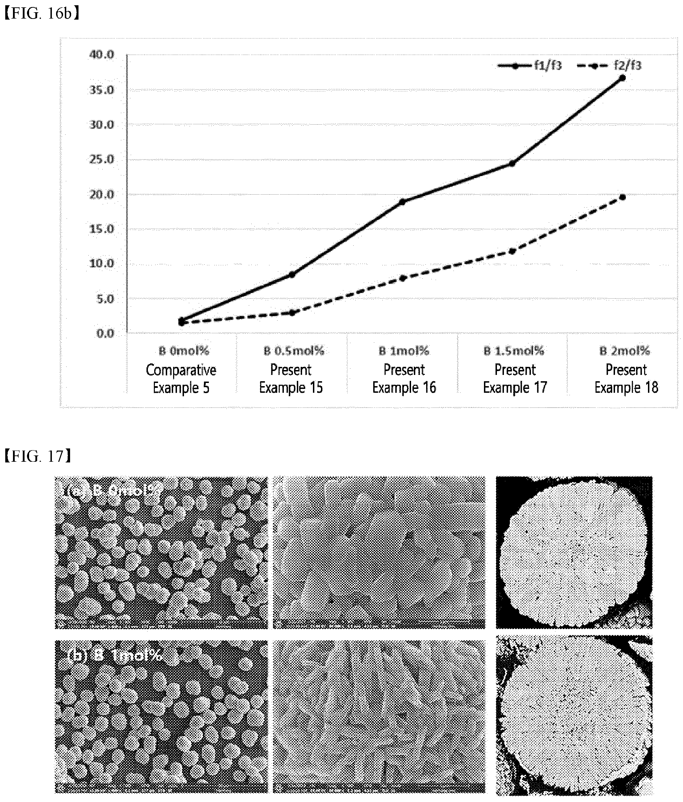

Table 11 below shows the results of measuring the first length f1, which is the major axis of the (003) plane of each of the primary particles disposed in the surface of the secondary particle among the primary particles using the SEM image, the second length f2, which is the minor axis of the (003) plane of the primary particle in the direction perpendicular to the first length f1, and the third length f3, which is the spacing between the (003) plane and the (003) plane. In Table 12, based on the average values of the first length f1, the second length f2 and the third length f3, the ratio of the first length f1 to the third length f3, and the ratio of the second length f2 to the length f3 are shown. FIG. 16a is a graph showing the first length, the second length, and the third length based on the boron (B) doping amount, and FIG. 16b is a graph showing the ratio of each of the first length and the second length to the third length based on the boron (B) doping amount.

[Table 11]

| | Examples | Comparative Example 5 | Present Example 15 | Present Example 16 | Present Example 17 | Present Example 18 |
|---|---|---|---|---|---|---|
| | B doping | B 0mol% | B 0.5mol% | B 1mol% | B 1.5mol% | B 2mol% |
| f1 | Average value | 665.2 | 1230.3 | 1045.9 | 991.9 | 1102.4 |
| | Maximum value | 1212.0 | 1839.0 | 1676.0 | 1509.0 | 1721.9 |
| | Minimum value | 259.0 | 546.0 | 359.0 | 401.0 | 529.1 |
| | Standard deviation | 249.1 | 346.1 | 319.5 | 319.5 | 327.8 |
| f2 | Average value | 519.0 | 446.2 | 437.2 | 477.8 | 588.2 |
| | Maximum value | 978.0 | 860.0 | 1087.0 | 803.0 | 1045.0 |
| | Minimum value | 224.0 | 185.0 | 210.0 | 264.0 | 287.0 |
| | Standard deviation | 187.5 | 129.5 | 152.5 | 136.4 | 190.3 |
| f3 | Average value | 351.3 | 145.8 | 55.5 | 40.6 | 30.0 |
| | Maximum value | 551.5 | 246.0 | 111.1 | 91.3 | 63.6 |
| | Minimum value | 194.0 | 35.3 | 23.7 | 17.4 | 3.5 |
| | Standard deviation | 98.1 | 39.2 | 18.2 | 14.0 | 9.7 |

[Table 12]

| Examples | Comparative Example 5 | Present Example 15 | Present Example 16 | Present Example 17 | Present Example 18 |
|---|---|---|---|---|---|
| B doping | B 0mol% | B 0.5mol% | B 1mol% | B 1.5mol% | B 2mol% |
| f1 | 665.2 | 1230.3 | 1045.9 | 991.9 | 1102.4 |
| f2 | 519.0 | 446.2 | 437.2 | 477.8 | 588.2 |
| f3 | 351.3 | 145.8 | 55.5 | 40.6 | 30.0 |
| f1/f3 | 1.894 | 8.437 | 18.850 | 24.425 | 36.71 |
| f2/f3 | 1.478 | 3.060 | 7.881 | 11.764 | 19.583 |

Referring to Table 9 and FIG. 15b, the value based on the XDR data corresponds to the overall average value of the primary particles constituting the secondary particle (dashed line, hereinafter, XRD based value). The value measured using the SEM image means a measurement value of the third length of each of the primary particles disposed in the surface of the secondary particle among the primary particles (solid line, hereinafter, a measured value). It was identified that when boron (B) was not doped at 0 mol% and boron (B) was doped at 0.05 mol%, the measured value was larger than the XRD-based value, whereas when boron (B) was doped at 0.5 mol%, 1 mol%, 1.5 mol% and 2 mol%, the measured value was smaller than the XRD-based value. It was identified that the ratio of I(003)/I(104) obtained using XRD data in Table 9 decreased as the doping amount of boron (B) increased. This is considered to be because the size of the primary particle is reduced due to the doping of boron (B), and thus the I(003) peak is relatively reduced.

Referring to FIG. 10 to FIG. 14, it was identified that as the doping amount of boron (B) increased, the third length of the primary particle gradually decreased. A cross section of the primary particle had a rectangular shape. That is, it was identified that when the boron (B) doping amount was 0 mol%, the corner of the primary particle was not clear and was partially curved, whereas as the boron (B) doping amount increased, a corner of primary particle had the angular shape and then a rectangular shape with a gradually decreasing third length was observed.

Referring to Table 11 and FIG. 16a, it was identified that in the NCO-based positive-electrode active material, the second length f2 did not vary significantly due to boron (B) doping, whereas the first length f1 increased as a boron (B) concentration reached up to 0.5 mol%, and then did not change any more and maintained a constant level when the boron (B) concentration exceeded 0.5 mol%. Further, it was identified that the third length decreased as the boron (B) doping amount increased, but did not decrease any more since the boron (B) doping amount reached approximately 1.5 mol%. That is, it was identified that the first length f1, the second length f2, and the third length f3 were all affected based on the boron (B) doping amount.

Referring to Table 12 and FIG. 16b, it was identified that both the ratio of the first length f1 to the third length f3 and the ratio of the second length f2 to the third length f3 increased. It was identified that a slope at which the ratio of the first length f1 with respect to the third length f3 was larger than a slope at which the ratio of the second length f2 with respect to the third length f3.

In Table 13 below, cases in the NCO-based positive-electrode active material when boron (B) is not doped (Comparative Example 5), when boron (B) is doped at 0.5 mol% (Present Example 15), when boron (B) is doped at 1 mol% (Present Example 16) and when each of boron (B) and molybdenum (Mo) is doped (co-doping) at 0.5 mol% are reviewed.

From Table 13 below, it was identified that all of Comparative Example 5, Present Example 15, Present Example 16, and Present Example 22 exhibited similar 0.1C discharge capacities. On the other hand, Comparative Example 5 in which boron (B) was not doped had capacity retention of 67.2% after 100 cycles, which was lower than that of each of Present Example 15, Present Example 16, and Present Example 22.

It was identified that when comparing Present Example 15 doped with 0.5 mol% boron (B) and Present Example 22 doped with 0.5 mol% boron (B) and 0.5 mol% molybdenum (Mo) with each other, Present Example 22 had the capacity retention after 100 cycles larger than that in Present Example 15. Further, it was identified that when comparing Present Example 16 and Present Example 22 in which boron (B) was doped at 1 mol% with each other, Present Example 22 had better capacity retention after 100 cycles than that in Present Example 16. That is, it is determined that the effect of the boron (B) is improved by doping the molybdenum (Mo) together with the boron (B) doping.

[Table 13]

| Examples | Type of positive-electrode active material | doping element | doping [mol%] | Refined Structure | 0.1C discharge capacity [mAh g-1] | Initial Coulombic Efficiency [%] | 0.5 C discharge capacity [mAh g-1] | Capacity retention after 100 cycles [%] |
|---|---|---|---|---|---|---|---|---|
| Comparative Example 5 | NCO-based | B | 0 | X | 225.3 | 95.1 | 209.8 | 67.2 |
| Present Example 15 | NCO-based | B | 0.5 | O | 234.2 | 96.1 | 218.2 | 83.3 |
| Present Example 16 | NCO-based | B | 1 | O | 236.2 | 96.7 | 222.8 | 88.9 |

(continued)

| Examples | Type of positive-electrode active material | doping element | doping [mol%] | Refined Structure | 0.1C discharge capacity [mAh g-1] | Initial Coulombic Efficiency [%] | 0.5 C discharge capacity [mAh g-1] | Capacity retention after 100 cycles [%] |
|---|---|---|---|---|---|---|---|---|
| Present Example 22 | NCO-based | B/Mo | 0.5/0.5 | O | 232.2 | 94.9 | 217.2 | 94.7 |

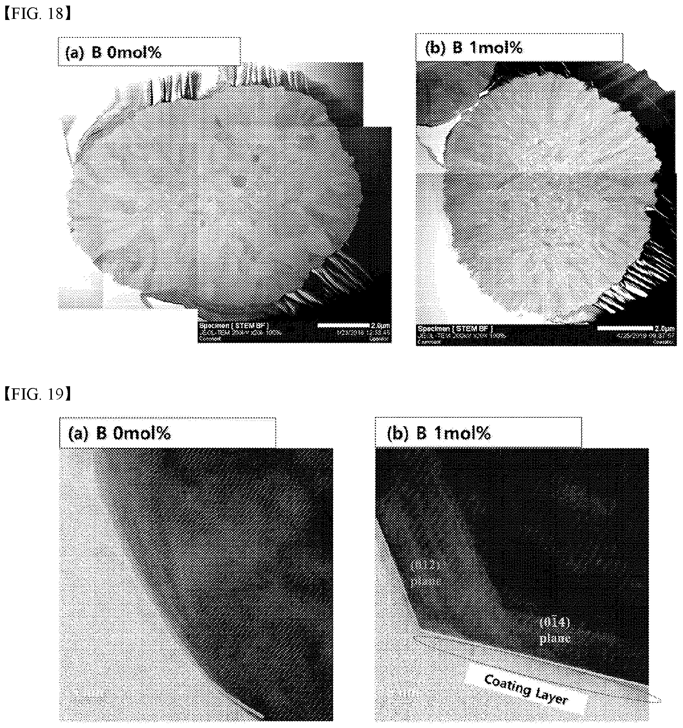

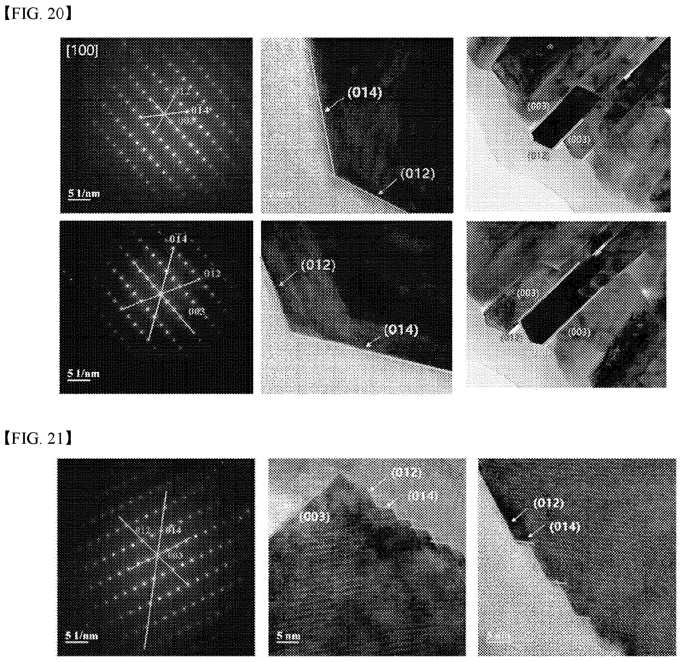

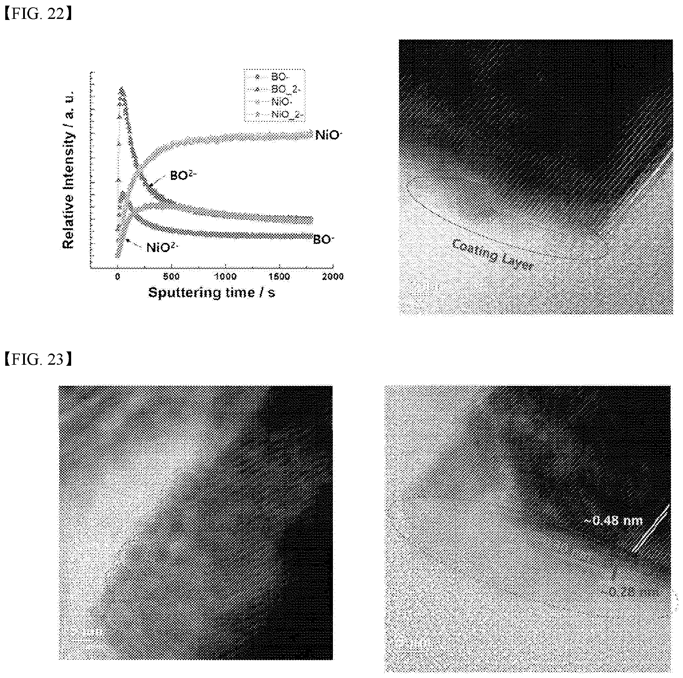

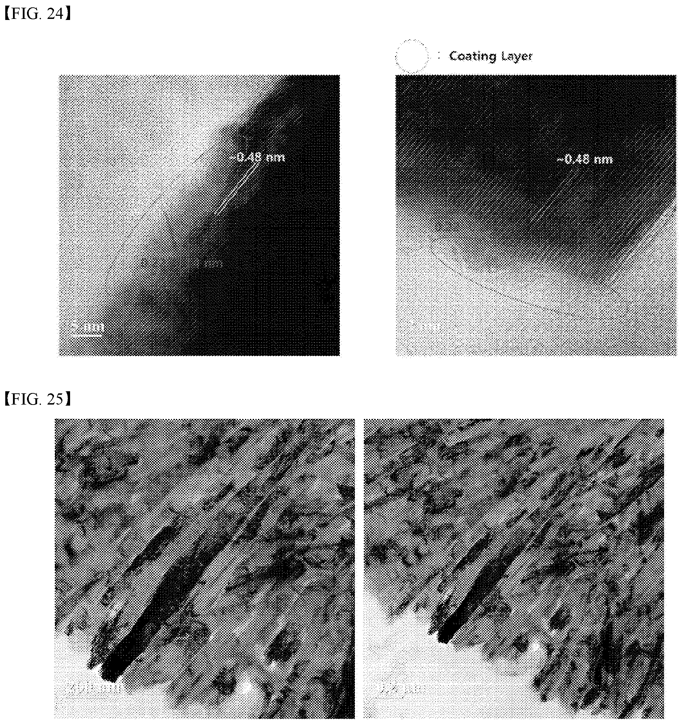

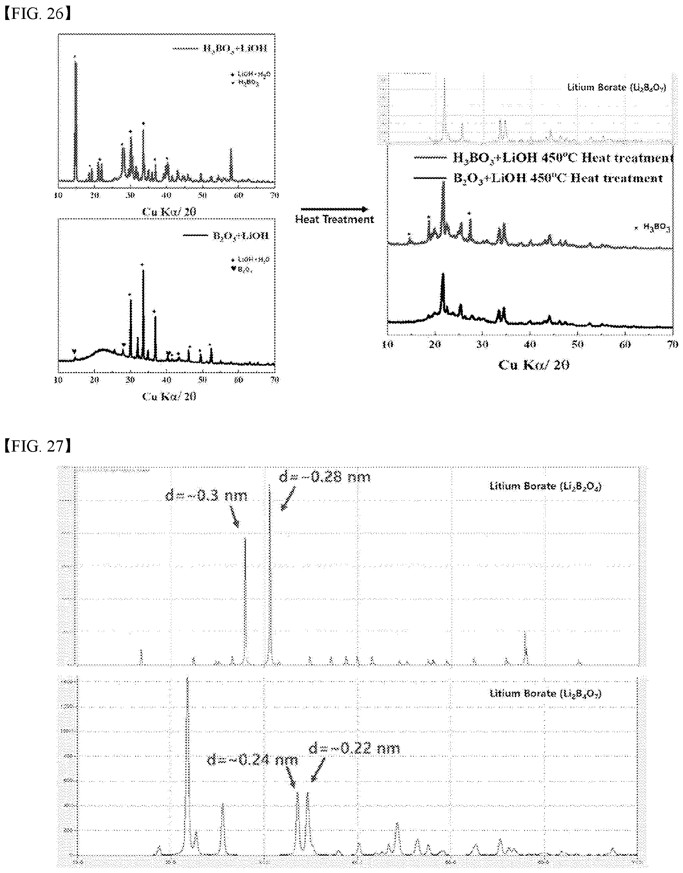

FIG. 17 is an SEM image of a positive-electrode active material according to each of Present Example 24 and Comparative Example 7, and FIG. 18 is a FIB TEM image of a positive-electrode active material according to each of Present Example 24 and Comparative Example 7. FIG. 19 is the FIB TEM image before the initial cycle of the positive-electrode active material according to each of Present Example 24 and Comparative Example 7, and FIG. 20 is the FIB TEM image before the initial cycle of each of Present Example 24 in FIG. 19. FIG. 21 is a FIB TEM image after 100 cycles of Present Example 24. FIG. 22 to FIG. 24 are the results of analyzing the coating layer of the primary particle disposed in the surface of the secondary particle in Present Example 24. FIG. 25 is a TEM image of the primary particle of Present Example 24. FIG. 26 to FIG. 28 are XRD analysis results before and after heat-treatment of borate and lithium hydroxide.

Referring to Table 9, in the case of producing the NCA-based positive-electrode active material using the metal composite hydroxide including 88.5 mol% nickel (Ni), the refined structure was not found in Comparative Example 7 without the boron (B) doping, whereas the refined structure was not found only in Present Example 23 and Present Example 24 doped with 0.5 mol% and 1 mol% of boron (B), respectively. Further, 0.1C discharge capacities in Comparative Example 7, Present Example 23 and Present Example 24 were similar to each other, that is, were 225.1 mAh/h, 224 mAh/g, and 229.8 mAh/g, respectively. However, it was identified that the capacity retentions after 100 cycles thereof were 83.7%, 92.2%, and 96.2%, respectively. That is, as the boron (B) doping amount increased, the capacity retention after 100 cycles increased.

Referring to Table 9, FIG. 17, and FIG. 18, it was identified that in Comparative Example 7, the third length of the primary particles was relatively larger, while in Present Example 24, the third length of the primary particle was smaller and the top corner of the primary particle had an angle, so that the longitudinal cross-section thereof was present in a form of a rectangle. This is considered to be because, in the case of Present Example 24, the outer ends of the primary particle disposed in the surface of the secondary particle among the primary particles constituting the secondary particle are connected to each other via the crystal planes due to the boron (B) doping.

FIG. 19 is an enlarged FIB TEM image of the surface of each of Comparative Example 7 and Present Example 24. In Comparative Example 7, the outer end is smoothly rounded, whereas in Present Example 24, two crystal planes such as (012) plane and (014) plane are connected to each other.

Referring to FIG. 20 and FIG. 21, it is identified that in Present Example 24, the (003) plane and the adjacent (003) plane of the primary particle disposed in the surface of the secondary particle face toward each other, and are spaced from each other and are parallel to each other. In a view of the longitudinal cross-section perpendicular to the crystal plane (003), the (012) plane and the (014) plane are connected to the pair of the adjacent (003) planes, respectively and are connected to each other and meet each other at an angle.

Referring to FIG. 20, it is identified that in the case of Present Example 24, before the initial cycle, the (003) plane and the adjacent (003) plane of the primary particle disposed in the surface of the secondary particle face toward each other, and are spaced from each other and are parallel to each other, and the pair of the adjacent (003) planes are connected to each other via at least two crystal planes. In this connection, in a view of the longitudinal cross-section perpendicular to the crystal plane (003), the pair of (003) planes are connected to each other via two or more crystal planes which are different crystal planes. In this way, Present Example 24 is composed of the pair of (003) planes and the plurality of crystal planes connecting the pair of (003) planes to each other. As a result, the surface of the secondary particle has a concave-convex structure.

FIG. 21 identifies the secondary particle after 100 cycles of Present Example 24. Present Example 24 still has a crystal plane after 100 cycles.

The positive-electrode active material according to this embodiment has the boron (B) doped thereto. Thus, the third length which is the thickness of the primary particle disposed in the surface of the secondary particle among the primary particles may be smaller. Further, in the positive-electrode active material according to this embodiment, the primary particle disposed in the surface of the secondary particle among the primary particles constituting the secondary particle had an angle at least some of the corners in a top view of the secondary particle. It may be identified that a cross sectional face of the primary particle disposed in the surface of the secondary particle as cut in the direction from the surface of the secondary particle toward the center thereof is partially defined by two different crystal planes meeting each other at an angle.

It is identified that in the positive-electrode active material according to this embodiment, the outer ends of the pair of the crystal planes adjacent and parallel to each other and spaced from each other are connected to each other via two or more crystal planes, and this structure is maintained even after a plurality of cycles. Thus, in the positive-electrode active material according to the present embodiment, the crystal planes of the primary particle in the surface of the secondary particle are connected to each other, thereby preventing the electrolyte from easily penetrating into the secondary particle. Thus, lifespan characteristics of the battery may be improved. Further, the primary particle is oriented in a direction toward the center of the secondary particle from the surface thereof, such that lithium ions are easily moved to the center of the secondary particle along the direction in which the primary particle is oriented. Thus, the microcrack may be suppressed during the charge/discharge process, thereby increasing the electrochemical efficiency and improving the lifespan characteristics.

Referring to FIG. 22 to FIG. 25 together with FIG. 19, it may be identified that the coating layer is disposed on the outer surface of the secondary particle in Present Example 24, although the coating layer is not shown in Comparative Example 7. When the produced coating layer was analyzed in Present Example 24, it was identified that borate was contained in the coating layer.

In FIG. 22, it may be identified that the concentration of boron (B) is provided to have a concentration-gradient in the coating layer, but to be uniform in the secondary particle. Further, the average concentration of boron (B) in the secondary particle may be in an error range of 0.05 mol% from 1 mol% as the concentration of boron (B) as added to the composite metal hydroxide.

For example, when the concentration of boron (B) added to the composite metal hydroxide is defined as Y1, the average concentration of boron (B) in the secondary particle is defined as Y2, and the average concentration of boron (B) in the coating layer is defined as Y3, following Equations 1 and 2 may be met.

$$\text{(Equation 1) } Y1\text{-}0.005 \leq Y2 \leq Y1\text{+}0.005$$

$$\text{(Equation 2) } Y2 < Y3$$

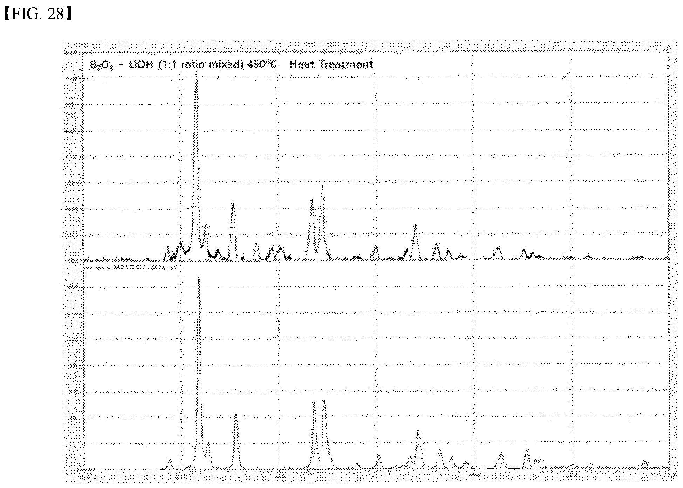

In FIG. 23 to FIG. 25, based on a result of identifying the surface of the secondary particle using TEM, it may be identified that the coating layer is provided to cover the second and third crystal planes of the first primary particle. Referring to FIG. 23 and FIG. 24, it may be identified that the spacing between the crystal planes is about 0.30nm, 0.28nm and 0.22 to 0.24nm. This corresponds to the XRD result that occurs when heat-treatment is performed in a mixed state of borate and lithium hydroxide as shown below (see FIG. 26 and FIG. 28).

That is, in the process of preliminarily sintering the mixture of the metal composite hydroxide, the borate particles, and lithium hydroxide at 450°C, the borate particles are uniformly dispersed inside the secondary particle, and at the same time, some thereof chemically react with lithium hydroxide in the surface of the secondary particle to form the coating layer. The coating layer formation may be associated with the second and third crystal planes formed in the surface of the secondary particle, the concentration of each of the components constituting the positive-electrode active material, the process of heat-treating the same, and the controlled pH in the process of co-precipitation.

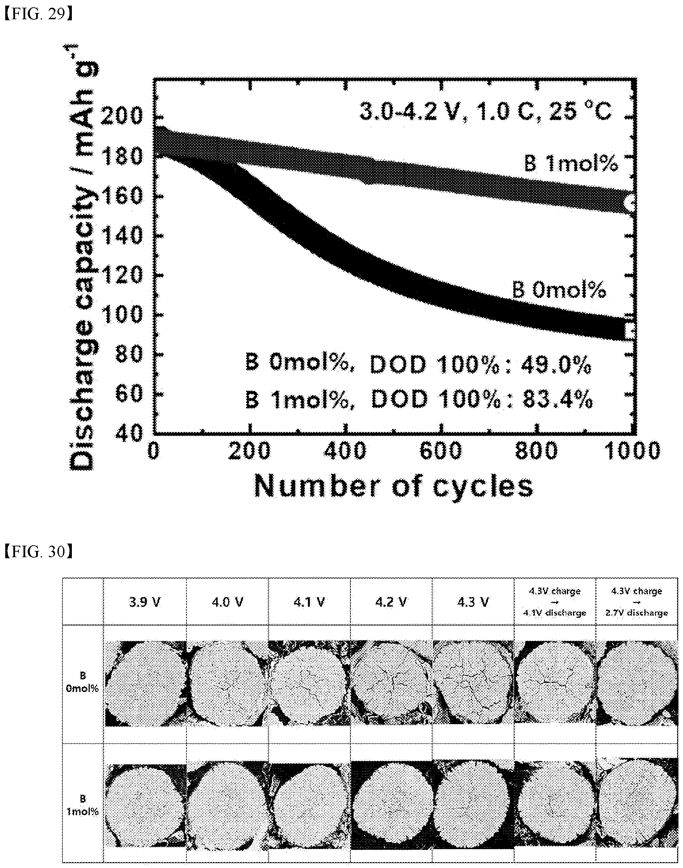

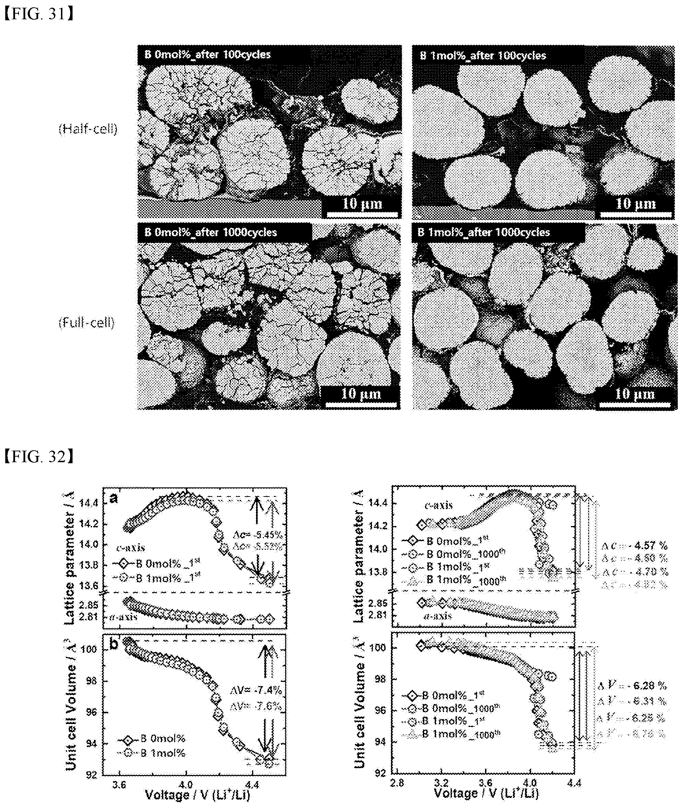

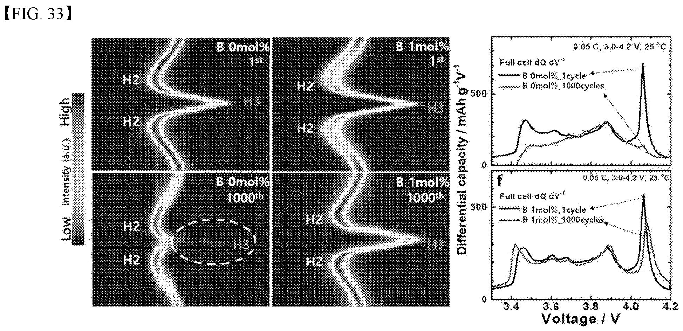

FIG. 29 is a cycle graph of the full-cell using the positive-electrode active material according to each of Present Example 24 and Comparative Example 7. FIG. 30 is an SEM image showing the cross-section of the secondary particle when charging the positive-electrode active material according to each of Present Example 24 and Comparative Example 7 to varying charging voltages. FIG. 31 shows SEM images after cycles of the half-cell and the full-cell using the positive-electrode active material according to each of Present Example 24 and Comparative Example 7. FIG. 32 and FIG. 33 are in-situ XRD data of each of Present Example 24 and Comparative Example 7.

A full-cell using each of Present Example 24 and Comparative Example 7 was subjected to charge and discharge cycles at a constant current of 1C at 25°C to 3.0V (discharge voltage) and 4.2V (charge voltage) (see FIG. 29). Thus, it was identified that in Present Example 24, the capacity change was insignificant up to 1000 cycles, while in Comparative Example 7, the capacity was reduced with starting from 200 cycles. Further, Present Example 24 exhibited 83.4% capacity retention at 1000 cycles, whereas Comparative Example 7 exhibited capacity retention of 49%. Thus, Present Example 24 and Comparative Example 7 had different lifespan characteristics.

Referring to FIG. 30, it was identified based on a result of charging while increasing the state of charge (SOC) to 3.9V, 4.0V 4.1V, 4.2V, and 4.2V that Comparative Example 7 exhibited a weak hairline at 4.1V, and the microcrack was formed with start from the center of the secondary particle at 4.2V, and, then, at 4.3V, the microcrack extended to the surface of the secondary particle. However, it was identified that in Present Example 24, a weak hairline appeared at 4.3V but was smaller than that as identified at 4.1V of Comparative Example 7, and the microcracks were not formed.

The cross-section of the secondary particle when Comparative Example 7 and Present Example 24 were charged to 4.3V and then discharged to 4.1V, and the cross-section of the secondary particle when Comparative Example 7 and Present Example 24 were charged to 4.3V and then discharged to 2.7V were compared with each other. It was identified that only in Comparative Example 7, the microcracks formed at 4.3V were formed in the secondary particle that was charged to 4.3V and then discharged to 4.1V.

The positive-electrode active material undergoes a continuous phase change such as H1 (hexagonal 1) -> M (monoclinic) -> H2 (hexagonal 2) -> H3 (hexagonal 3) in the charging process. The last H2 -> H3 causes a sudden anisotropic volume change. In this connection, the volume change proceeds gently up to 4.15V, which is the voltage before the H2 -> H3 phase transition begins. The cell volume rapidly decreases at 4.2V, where the H2 -> H3 phase transition begins.

It may be identified that in Comparative Example 7, at 4.1V after charging to 4.3V where this rapid volume change begins, the microcrack is formed in the refined structure of the secondary particle, whereas in Present Example 24, at 4.1V after charging to 4.3V the microcrack is not formed in the refined structure of the secondary particle. This is believed to be because in Present Example 24, even during the H2 -> H3 phase change as described above, the primary particle is oriented in the secondary particle so that the microcrack in the refined structure due to the anisotropic volume change is not formed. However, in Comparative Example 7, the volume change occurring in the H2 -> H3 phase change process is not fully recovered reversibly in the cycle process, but remaining irreversible portions thereof accumulate and thus the cracks are formed in the secondary particle after cycle progress (refer to FIG. 32 and FIG. 33).

FIG. 31 shows the SEM image of the secondary particle after 100 cycles on the half-cell and after 1000 cycles on the full-cell, wherein the half-cell and the full-cell are fabricated using each of Comparative Example 7 and Present Example 24. As shown in FIG. 31, it may be identified that in Comparative Example 7, microcracks are formed in an entire are of the secondary particle, and in severe cases, the secondary particle is almost destructed. On the other hand, it may be identified that in Present Example 24, the original particle shape is almost maintained in both the half-cell and the full-cell.

That is, in the case of Present Example 24, with the boron (B) doping, the primary particles produced in the metal composite hydroxide producing process are oriented to produce the secondary particle. Each of the primary particles disposed in the surface of the secondary particle among the primary particles has the coating layer disposed on a surface thereof and has a plurality of crystal planes. Thus, the volume change thereof is reversibly performed in the charging/discharging process, thereby preventing microcracks, etc., such that the cycle characteristics are improved.

100 cycles wherein each cycle is composed of 2.7V discharge at 0.5C constant current and 4.3 V charge at 0.5C constant current were performed on a half-cell using the positive-electrode active material as the positive-electrode according to each of Present Examples and Comparative Examples. Then, the intensity of the peak corresponding to the phase transition of H2-H3 after 100 cycles is compared with that after 1 cycle. Thus, the comparing result is shown in Table 14 below. The intensity of the peak corresponding to the phase transition of H2-H3 was identified using the dQ/dV curve which is a graph obtained by differentiating the charge/discharge curve at the first-order.

[Table 14]

| Examples | Type of positive-electrode active material | Doping element | Doping amount[mol [%] | Capacity retention after 100 cycles [%] | H2/H3 peak retention after 100 cycles [%] |
|---|---|---|---|---|---|
| Present Example3 | NCM-based | B | 0.4 | 89.2 | 73.4 |
| Present Example4 | NCM-based | B | 1 | 91.4 | 82.7 |
| Comparativ e Example5 | NCO-based | B | 0 | 67.2 | 38.1 |
| Present Example 13 | NCO-based | B | 0.05 | 77.3 | 48.8 |
| Present Example 14 | NCO-based | B | 0.1 | 81.3 | 52.6 |
| Present Example 15 | NCO-based | B | 0.5 | 83.3 | 61.4 |

(continued)

| Examples | Type of positive-electrode active material | Doping element | Doping amount[mol [%] | Capacity retention after 100 cycles [%] | H2/H3 peak retention after 100 cycles [%] |
|---|---|---|---|---|---|
| Present Example 16 | NCO-based | B | 1 | 88.9 | 70.3 |
| Present Example 17 | NCO-based | B | 1.5 | 91.2 | 83.5 |
| Present Example 18 | NCO-based | B | 2 | 91.6 | 82.6 |
| Present Example 19 | NCO-based | B | 3 | 91.3 | 80.1 |
| Present Example20 | NCO-based | B | 4 | 86.6 | 75.6 |
| Present Example21 | NCO-based | B | 5 | 85.9 | 77.5 |
| Comparativ e Example6 | NCO-based | B | 7 | 85.8 | 50.4 |
| Comparativ e Example7 | NCA-based | B | 0 | 83.7 | 63.7 |
| Present Example23 | NCA-based | B | 0.5 | 92.2 | 90.6 |
| Present Example24 | NCA-based | B | 1 | 96.2 | 94 |

Referring to Table 14, it was identified that in Present Example 3 and Present Example 4, the intensities of the peak corresponding to the phase transition of H2-H3 after 100 cycles (H2/H3 peak retention after 100 cycles [%]) compared to that after 1 cycle were 73.4%, and 82.7% respectively. It was identified that when Comparative Example 5, Comparative Example 6, and Present Example 13 to Present Example 21 were compared with each other, each of Present Example 13 to Present Example 21 had a value greater than or equal to 40%, while Comparative Example 5 had a low value of 38.1%. It was identified that when comparing Present Example 13 to Present Example 19 with each other, as the boron doping amount increased, the value increased. That is, it was identified that as the doping amount of boron increased, a structure similar to that after 1 cycle was maintained even after 100 cycles. Further, it was identified that when Comparative Example 7, Present Example 23, and Present Example 24 were compared with each other, the similar trend appeared.

Table 15 below shows the test results of the co-doping example in which another doping element together with boron is further added thereto.

[Table 15]

| Examples | Type of positive-electrode active material | Chemical Formula of positive-electrode active material powder | Dop ant | Doping amount [mol %] | Refined Structure | 0.1C discharge capacity [mAh g-1] | Capacity retention after 100 cycles [%] |
|---|---|---|---|---|---|---|---|
| Comparativ e Example5 | NCO-based | $Li_{1.01}Ni_{0.9}Co_{0.10}O_2$ | B | 0 | X | 225.3 | 67.2 |
| Present Example 15 | NCO-based | $Li_{1.01}B_{0.005}Ni_{0.9}Co_{0.10}O_2$ | B | 0.5 | O | 234.2 | 83.3 |
| Present Example 16 | NCO-based | $Li_{1.01}B_{0.01}Ni_{0.9}Co_{0.10}O_2$ | B | 1 | O | 236.2 | 88.9 |
| Present Example22 | NCO-based | $Li_{1.01}B_{0.005}Ni_{0.895}Co_{0.10}MO_{0.005}O_2$ | B/M o | 0.5/0.5 | O | 232.2 | 94.7 |
| Comparativ e Example 13 | NCO -based | $Li_{1.01}[Ni_{0.96}Co_{0.04}]O_2$ | B | 0 | X | 237.2 | 78.4 |
| Present Example 30 | NCO -based | $Li_{1.01}B_{0.005}Ta_{0.005}Ni_{0.95}Co_{0.10}O_2$ | B/Ta | 0.5/0.5 | O | 239.4 | 89.4 |
| Present Example31 | NCO -based | $Li_{1.01}B_{0.005}Nb_{0.005}Ni_{0.95}Co_{0.10}O_2$ | B/N b | 0.5/0.5 | O | 242.8 | 87.2 |
| Present Example32 | NCO -based | $Li_{1.01}B_{0.005}Mo_{0.005}Ni_{0.95}CO_{0.10}O_2$ | B/M o | 0.5/0.5 | O | 242.2 | 88.7 |
| Present Example33 | NCO -based | $Li_{1.01}B_{0.005}Sb_{0.005}Ni_{0.95}Co_{0.10}O_2$ | B/Sb | 0.5/0.5 | O | 239.4 | 91.6 |

Referring to Table 15, it was identified that in co-doping of boron and molybdenum (Present Example 22), co-doping of boron and tantalum (Present Example 30, Present Example 32), co-doping of boron and niobium (Present Example 31), and co-doping of boron and antimony (Present Example 33), the refined structure appeared. The capacity retention after 100 cycles was larger than 80%, which was superior to that in the case in which boron was not doped.

It was identified that when comparing Comparative Example 5, Present Example 15, Present Example 16, and Present Example 22 with each other in the case of Ni 90mol%, the capacity retention was excellent as the content of boron increased. It was identified that when comparing Present Example 16 and Present Example 22 with each other in which the total doping amount was the same, Present Example 22 co-doped with boron and molybdenum had better capacity retention than that in Present Example 16 doped with boron only.

It was identified when comparing Comparative Example 13 and Present Example 30 to Present Example 33 with each other that when co-doped dopants include boron, all examples had a refined structure and exhibited excellent capacity retention even after 100 cycles regardless of the types of the dopants as co-doped.

Those of ordinary skill in the technical field to which the present disclosure belongs will be able to understand that the present disclosure may be implemented in other specific forms without changing technical idea or essential characteristics thereof. Therefore, it should be understood that the embodiments as described above are illustrative in all respects and not restrictive. The scope of the present disclosure is indicated by the following claims rather than the detailed description, and all changes or modifications derived from the meaning and scope of the claims and their equivalents are included in the scope of the present disclosure.

Reference numerals

    100: first primary particle
    110: first crystal plane
    120: second crystal plane
    130: third crystal plane
    200: secondary particle

## Claims

1. A positive-electrode active material including secondary particles, wherein each of the secondary particles is composed of an aggregate of a plurality of primary particles,

    wherein at least some of the primary particles disposed in a surface of the secondary particle are defined as first primary particles, wherein each of the first primary particles has a flake shape having a pair of first crystal planes facing toward each other,
    wherein each of the first crystal planes of the first primary particle is oriented in a radial direction of the secondary particle, wherein outer ends of the pair of the first crystal planes are connected to a plurality of crystal planes different from the first crystal planes such that the plurality of crystal planes connect the outer ends of the pair of the first crystal planes to each other, wherein the plurality of crystal planes include a second crystal plane and a third crystal plane,
    wherein a longitudinal cross-section of the first primary particle is defined by the pair of first crystal planes spaced apart from each other, and the second crystal plane and the third crystal plane connecting the outer ends of the pair of first crystal planes to each other,
    wherein the second and third crystal planes are disposed in an outermost face of the secondary particle and are connected to and meet each other at a predefined angle.

2. The positive-electrode active material of claim 1, wherein the first primary particle has a first length as a major axis of the first crystal plane, a second length as a minor axis of the first crystal plane perpendicular to the first length, and a third length as an spacing between the pair of first crystal planes spaced from each other,
   wherein the third length is in a range of 10nm to 400nm.

3. The positive-electrode active material of claim 2, wherein a ratio of the first length to the third length is in a range of 2 to 100, and a ratio of the second length to the third length is in a range of 1.5 to 80

4. The positive-electrode active material of claim 2, wherein the positive-electrode active material include a layered rhombohedral system compound,

wherein the first crystal plane has a Miller index (hkℓ) where h=0, k=0, ℓ=3n, and n is an integer,
wherein the first crystal plane, the second crystal plane, and the third crystal plane are different from each other.

5. The positive-electrode active material of claim 2, wherein the predefined angle between the second crystal plane and the third crystal plane is in a range of 30° to 170°.

6. The positive-electrode active material of claim 1, wherein when a 2032 coin-type half-cell prepared using the positive-electrode active material as a positive-electrode, and using lithium metal as a negative-electrode is subjected to 100 cycles of charging to 4.3 V at 0.5 C constant current and discharging to 2.7 V at 0.5 C constant current to obtain a dQ/dV curve, an intensity of a peak corresponding to a phase transition of H2 to H3 in the dQ/dV curve is equal to or greater than 40% of an intensity of a peak corresponding to a phase transition of H2 to H3 when the 2032 coin-type half-cell is subjected to 1 cycle.

7. The positive-electrode active material of claim 1, wherein the primary particle includes nickel (Ni), M1 and M2,

wherein M1 is made of at least one of manganese (Mn), cobalt (Co) and aluminum (Al),
wherein a content of the nickel (Ni) is 65 mol% or greater,
wherein M2 is a doping element, and has a content in a range of 0.05 mol% to 5 mol%.

8. The positive-electrode active material of claim 2, wherein M2 includes:

boron (B); or
boron (B) and at least one selected from a group consisting of tungsten (W), molybdenum (Mo), tantalum (Ta), niobium (Nb), hafnium (Hf), silicon (Si), tin (Sn), zirconium (Zr), calcium (Ca), Germanium (Ge), gallium (Ga), indium (In), ruthenium (Ru), tellurium (Te), antimony (Sb), iron (Fe), chromium (Cr), vanadium (V) and titanium (Ti).

9. The positive-electrode active material of claim 8, wherein a coating layer including boron (B) covers at least a portion of the second and third crystal planes.

10. The positive-electrode active material of claim 9, wherein a concentration of boron (B) is uniform in the secondary particle, and a concentration of boron (B) has a concentration-gradient in the coating layer,
wherein an average concentration of boron (B) in the coating layer is higher than an average concentration of boron (B) in the secondary particle.

11. The positive-electrode active material of claim 10, wherein the coating layer includes lithium borate selected from a group consisting of $LiBO_2$, $LiB_3O_5$, $LiB_5O_8$, $\alpha$-$LiBO_2$, $Li_2B_2O_4$, $Li_2B_2O_7$, $Li_2B_4O_7$, $Li_2B_6O_7$, $Li_2B_6O_{10}$, $Li_2B_8O_{13}$, $Li_3BO_3$, $Li_3B_7O_{12}$, $Li_4B_2O_5$, $\alpha$-$Li_4B_2O_5$, $\beta$-$Li_4B_2O_5$, $Li_4B_{10}O_{17}$ and $Li_6B_4O_9$.

12. The positive-electrode active material of claim 1, wherein when a half-cell prepared using the positive-electrode active material as a positive-electrode, and using lithium metal as a negative-electrode is charged up to 4.3 V at 0.5 C constant current, a total area of microcracks as spaces defined between boundaries of neighboring primary particles in the secondary particle is smaller than 15% of a cross-sectional area of the secondary particle.

13. The positive-electrode active material of claim 7, wherein when the secondary particle is subjected to X-ray diffraction analysis based on a measuring result thereof using a device with 45 kV and 40 mA output, and using a Cu Ka beam source, and at a scan rate of 1 degree per minute at 0.0131 step size spacing, a ratio between an intensity of a 003 peak and an intensity of a 104 peak is in a range of 1.6 to 2.3

14. The positive-electrode active material of claim 13, wherein as a content of the doping element increases, the ratio between the intensity of the 003 peak and the intensity of the 104 peak decreases.

15. The positive-electrode active material of claim 13, wherein the secondary particle has a sphere shape having a center and a surface,

wherein the first crystal plane of the first primary particle extends from the center to the surface thereof,

wherein the second and third crystal planes of the first primary particle are disposed in the surface of the secondary particle, so that an outermost portion of the surface of the secondary particle has a concave-convex structure defined by the second and third crystal planes.

16. The positive-electrode active material of claim 15, wherein the secondary particle is represented by a following <Chemical Formula 1>:

<Chemical Formula 1> $Li_aM_xD_yO_2$

where in the <Chemical Formula 1>, M denotes at least one of Ni, Co, Mn, or Al; D denotes a doping element composed only of B or a co-doping element composed of a combination of B and one of W, Mo, Nb, Ta, and Sb, wherein $0.9 < a < 1.1$, and $x + y = 1$, and $0.95 < x < 1$, $0 < y < 0.05$,
wherein a coating layer covering at least a portion of the second and third crystal planes is disposed on the surface of the secondary particle.

17. The positive-electrode active material of claim 16, wherein the first primary particle has a flake shape having a first length as major axis of the first crystal plane, a second length as a minor axis of the first crystal plane perpendicular to the first length, and a third length as a spacing between the pair of first crystal planes,

wherein a content of the doping element is in a range of 0.05 mol% to 5 mol%,
wherein as a concentration of the doping element increases, the first length of the first primary particle increases, while the third length thereof decreases.

18. A positive-electrode for a secondary battery including the positive-electrode active material according to one of claims 1 to 17.

19. A lithium secondary battery including the positive-electrode according to claim 18.

20. A battery module including the lithium secondary battery according to claim 19 as a unit cell.

21. A battery pack including the battery module according to claim 20, wherein the battery pack is used as a power source for a medium and large sized apparatus,
wherein the medium and large sized apparatus is selected from a group consisting of an electric vehicle, a hybrid electric vehicle, a plug-in hybrid electric vehicle, and a power storage system.

【FIG. 1a】

【FIG. 1b】

【FIG. 1c】

【FIG. 2】

Start

Preparing a metal solution — S210

Producing a metal composite hydroxide via co-precipitation reaction — S220

Crushing borate to particles of a first particle size — S230

Pre-sintering in a first temperature range and for a first time duration — S240

Sintering in a second temperature range and for a second time duration — S250

End

【FIG. 3】

【FIG. 4】

【FIG. 5】

【FIG. 6】

【FIG. 7】

【FIG. 8】

【FIG. 9】

【FIG. 10】

(a) B 0 mol%(Pristine)

3 μm

【FIG. 11】

(b)B 0.5 mol%

3 μm

【FIG. 12】

(c)B 1.0 mol%

3 μm

【FIG. 13】

(d)B 1.5 mol%

3 μm

【FIG. 14】

(e)B 2.0 mol%

3 μm

【FIG. 15a】

(003) plane Avg. Width [nm]

【FIG. 15b】

【FIG. 16a】

【FIG. 16b】

【FIG. 17】

【FIG. 18】

(a) B 0mol%
(b) B 1mol%

【FIG. 19】

(a) B 0mol%
(b) B 1mol%

【FIG. 20】

【FIG. 21】

【FIG. 22】

【FIG. 23】

【FIG. 24】

: Coating Layer

【FIG. 25】

【FIG. 26】

【FIG. 27】

【FIG. 28】

B₂O₃ + LiOH (1:1 ratio mixed) 450°C  Heat Treatment

【FIG. 29】

【FIG. 30】

【FIG. 31】

【FIG. 32】

【FIG. 33】

## INTERNATIONAL SEARCH REPORT

| | International application No. |
|---|---|
| | **PCT/KR2020/008500** |

| **A. CLASSIFICATION OF SUBJECT MATTER** |
|---|
| **H01M 4/525**(2010.01)i; **H01M 4/36**(2006.01)i; **H01M 4/62**(2006.01)i; **H01M 10/052**(2010.01)i |
| According to International Patent Classification (IPC) or to both national classification and IPC |

| **B. FIELDS SEARCHED** |
|---|
| Minimum documentation searched (classification system followed by classification symbols) |
| H01M 4/525; H01M 10/052; H01M 4/131; H01M 4/485; H01M 4/505; H01M 4/36; H01M 4/62 |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: 양극활물질(active material), 플레이크(flake), 결정면(crystal face), 방사형(radial), 최외면(outermost), 이차전지(second battery), 코팅층(coating layer), 도핑(dopant) |

| **C. DOCUMENTS CONSIDERED TO BE RELEVANT** | | |
|---|---|---|
| Category* | Citation of document, with indication, where appropriate, of the relevant passages | Relevant to claim No. |
| X<br><br>Y | KR 10-2019-0065963 A (SAMSUNG SDI CO., LTD.) 12 June 2019. See paragraphs [0019], [0021]-[0023], [0028]-[0030], [0034], [0045]-[0049] and [0087]; claim 14; and figures 1 and 3. | 1-6,12,15,18-21<br><br>7-11,13,14,16,17 |
| Y | KR 10-2017-0063395 A (LG CHEM, LTD.) 08 June 2017. See claims 1, 3 and 4. | 7-11,13,14,16,17 |
| A | KR 10-2019-0008156 A (IUCF-HYU (INDUSTRY-UNIVERSITY COOPERATION FOUNDATION HANYANG UNIVERSITY)) 23 January 2019. See entire document. | 1-21 |
| A | KR 10-2019-0044327 A (UNIST(ULSAN NATIONAL INSTITUTE OF SCIENCE AND TECHNOLOGY)) 30 April 2019. See entire document. | 1-21 |

☑ Further documents are listed in the continuation of Box C.　　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 October 2020** | **08 October 2020** |

| Name and mailing address of the ISA/KR | Authorized officer |
|---|---|
| **Korean Intellectual Property Office**<br>**Government Complex Daejeon Building 4, 189, Cheongsa-ro, Seo-gu, Daejeon, Republic of Korea**<br>**35208** | |
| Facsimile No. **+82-42-481-8578** | Telephone No. |

Form PCT/ISA/210 (second sheet) (July 2019)

**INTERNATIONAL SEARCH REPORT**

| | International application No. |
|---|---|
| | **PCT/KR2020/008500** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2018-0077018 A (LG CHEM, LTD.) 06 July 2018. See entire document. | 1-21 |

Form PCT/ISA/210 (second sheet) (July 2019)

**INTERNATIONAL SEARCH REPORT**
Information on patent family members

International application No.

**PCT/KR2020/008500**

| Patent document cited in search report | | | Publication date (day/month/year) | Patent family member(s) | | | Publication date (day/month/year) |
|---|---|---|---|---|---|---|---|
| KR | 10-2019-0065963 | A | 12 June 2019 | US | 2019-0173076 | A1 | 06 June 2019 |
| | | | | WO | 2019-112279 | A2 | 13 June 2019 |
| | | | | WO | 2019-112279 | A3 | 08 August 2019 |
| KR | 10-2017-0063395 | A | 08 June 2017 | CN | 107925068 | A | 17 April 2018 |
| | | | | EP | 3331067 | A4 | 25 July 2018 |
| | | | | EP | 3331067 | A1 | 06 June 2018 |
| | | | | JP | 6644135 | B2 | 12 February 2020 |
| | | | | JP | 2018-534734 | A | 22 November 2018 |
| | | | | KR | 10-2004457 | B1 | 29 July 2019 |
| | | | | US | 2018-0287135 | A1 | 04 October 2018 |
| | | | | WO | 2017-095134 | A1 | 08 June 2017 |
| KR | 10-2019-0008156 | A | 23 January 2019 | WO | 2019-013605 | A1 | 17 January 2019 |
| KR | 10-2019-0044327 | A | 30 April 2019 | CN | 109952671 | A | 28 June 2019 |
| | | | | EP | 3499614 | A4 | 23 October 2019 |
| | | | | EP | 3499614 | A1 | 19 June 2019 |
| | | | | JP | 2020-504416 | A | 06 February 2020 |
| | | | | KR | 10-2005513 | B1 | 30 July 2019 |
| | | | | US | 2019-0296324 | A1 | 26 September 2019 |
| | | | | WO | 2019-078399 | A1 | 25 April 2019 |
| KR | 10-2018-0077018 | A | 06 July 2018 | CN | 108336326 | A | 27 July 2018 |
| | | | | CN | 110352518 | A | 18 October 2019 |
| | | | | JP | 2020-507894 | A | 12 March 2020 |
| | | | | KR | 10-2018-0077081 | A | 06 July 2018 |
| | | | | KR | 10-2024744 | B1 | 25 September 2019 |
| | | | | KR | 10-2117621 | B1 | 02 June 2020 |
| | | | | US | 2018-0183046 | A1 | 28 June 2018 |
| | | | | WO | 2018-143753 | A1 | 09 August 2018 |

Form PCT/ISA/210 (patent family annex) (July 2019)

**EP 3 989 316 A1**

## REFERENCES CITED IN THE DESCRIPTION

### Patent documents cited in the description

- KR 1020140119621

- KR 1020130150315